# EUROPEAN PATENT SPECIFICATION

(11) **EP 4 680 372 B1**
(45) Date of publication and mention of the grant of the patent: **04.11.2026**
(21) Application number: 24708494.0
(22) Date of filing: 06.03.2024
(51) Int. Cl.: B01D 53/04, B01D 53/22

(54) **PROCESSES AND SYSTEMS FOR REGENERATION OF A SORBENT**
VERFAHREN UND SYSTEME ZUR REGENERATION EINES SORPTIONSMITTELS
PROCÉDÉS ET SYSTÈMES DE RÉGÉNÉRATION D'UN SORBANT

(30) Priority: 13.03.2023 EP 23161389
(43) Date of publication of application: 21.01.2026
(73) Proprietor: Shell Internationale Research Maatschappij B.V., 2596 HR The Hague (NL)
(72) Inventor: BALAJI, Sayee Prasaad, 1031 HW Amsterdam (NL); NISBET, Timothy Michael, 1031HW Amsterdam (NL); ANANDHAN, Muthu Mailvaganan, Boston, Massachusetts MA 02210 (US); BRODIE, Charles Duncan, Boston, Massachusetts MA 02110 (US); COSTEN, Mike, Milford, Connecticut CT 06460 (US)
(74) Representative: Shell Technology IP Department
(86) International application number: PCT/EP2024/055843
(87) International publication number: WO 2024/188754

(56) References cited:
- US-A1- 2014 060 322
- US-A1- 2022 176 310
- US-A1- 2023 023 050
- US-B1- 11 266 943

## Description

### Field of the Invention

The present specification generally relates to the field of gas capture by a sorbent, and more specifically, to methods and systems for regenerating the sorbent to release the captured gas.

### Background of the Invention

This section is intended to introduce various aspects of the art, which may be associated with exemplary embodiments of the present invention. This discussion is believed to assist in providing a framework to facilitate a better understanding of particular aspects of the present invention. Accordingly, it should be understood that this section should be read in this light, and not necessarily as admissions of any prior art.

The atmospheric carbon-dioxide (CO₂) level is increasing at least in part due to emissions from various sources, including industrial sites like thermal power plants, oil refineries, and other processing plants such as cement, steel, aluminium, and the like. The increased level of atmospheric carbon-dioxide (CO₂) has been linked to global warming. Various technologies are being used and/or developed to reduce the amount of CO₂ emitted into the atmosphere as one precautionary measure to address global warming. In addition, various governments have established or plan to establish programs that either provide economic incentives to reduce CO₂ emissions and/or regulations limiting CO₂ emissions, all of which encourage the development of CO₂ capture technologies.

Direct air capture (DAC) of carbon dioxide from a gaseous feed stream, such as air, has been proposed as one way of addressing human induced climate change. Current estimates place global levels of carbon dioxide in the atmosphere at around 420 parts per million. This is expected to rise to around 900 parts per million by the end of the 21^{st} century. Hence, DAC represents one of a range of technologies that can be employed to reduce the environmental impact of greenhouse gases like carbon dioxide and help the transition to a low carbon global economy.

Typical DAC systems take large quantities of air (or other conditioned gaseous atmosphere) which is pumped as a feed stream through a unit that contains a sorbent substance that removes the carbon dioxide from the feed stream under ambient conditions. Over time the sorbent becomes loaded with captured carbon dioxide. Next, the captured carbon dioxide in the sorbent is extracted from the sorbent in a regeneration step. Regeneration may involve thermal or chemical processes depending upon the type of sorbent material that is selected for use in the DAC. For example, amine-functionalised resins such as supported polymer amines can serve as effective sorbents that are regenerated with steam at temperatures of above 50°C, typically up to or around 130°C. Upon regeneration the captured carbon dioxide is released from the sorbent and can be used to manufacture sustainable fuels, specialty chemicals, in food and beverage production or in carbon capture and sequestration (CCS) in order to create a net negative carbon process.

US11266943B1 describes an atmospheric carbon dioxide removal system, comprising: a plurality of carbon capture containers, each carbon capture container having an outwardly facing side and an inwardly facing side, the inwardly facing side facing an enclosed space; a plurality of fans disposed adjacent the plurality of carbon capture containers, the plurality of fans being arranged to move air through the plurality of carbon capture containers in a first direction from the outwardly facing side into the enclosed space; an air diverter disposed within the enclosed space that is structurally configured to receive the air flowing in the first direction and redirect the air to flow in a second direction angled upwardly from the first direction; and a velocity stack disposed on top of the enclosed space and configured to accelerate the flow of the air in the second direction. US11266943B1 further describes a plurality of regeneration structures disposed adjacent the plurality of carbon capture containers, the carbon capture containers being configured to remove carbon dioxide from the air that is flowing in the first direction; and wherein the regeneration structures being configured to remove the carbon dioxide from the carbon capture containers.

US2014/06022A1 describes a method of fabricating an adsorbent contactor, comprising: obtaining two or more plates, wherein each of the two or more plates have a plurality of gaseous openings and at least one utility fluid opening; aligning the two or more plates, wherein the plurality of gaseous openings are substantially oriented along a common axis for each of the plurality of gaseous openings; diffusion bonding the aligned plates to form a module; and wash coating the plurality of gaseous openings within the module with an adsorbent material.

For instance, EP3725391B describes a system for capture of CO₂ from ambient air wherein a cavity with sealed walls which contains a sorbent is further sealed by a pair of sliding doors. In another example, EP4061507A describes a system for CO₂ capture wherein a chain of sorbent structures is moved along a loop in and out of a regeneration box.

These references, however, require complex sealed systems that can be costly to build and maintain over time. Moreover, they do not contemplate any particular manner to provide the regenerating fluid to reduce mixing of the regeneration fluid with the entrained feed gas in the sorbent during regeneration.

As such, there is still a need to provide improved systems and processes that can operate continuously providing efficient phases of absorption and desorption of carbon dioxide from sorbent structures. These and other objectives will become apparent from the disclosure provided herein.

### Summary of the Invention

According to one aspect, there is provided a sorbent housing and regenerating system for a direct air capture (DAC) system, comprising: a sorbent housing module and a regenerating unit. The sorbent housing module comprises two side segments, a top segment, a bottom segment, an opening comprising two opposing faces, the opening being defined at least by the two side, top, and bottom segments. A first face of the opening comprises a first seal assembly. The opposing face of the opening comprises a second seal assembly. The sorbent housing module further comprises one or more sorbent structure(s) to capture a selected gas from a gas mixture. The one or more sorbent structure(s) comprise a plurality of flow channels, which are preferably parallel to one another. The one or more sorbent structure(s) are arranged in the opening such that the flow channels extend from one face to the other opposing face of the opening. The regenerating unit comprises a pair of opposing doors. Each door faces a respective face of the opening of the sorbent housing module. One door comprises an inlet to provide a regenerating fluid to the sorbent housing module, the inlet being located near a top portion of the respective door. The same or the other door comprises an outlet for the regenerating fluid to exit the sorbent housing module, the outlet being located near a bottom portion of the respective door. Optionally, the same door comprises both the inlet and the outlet. In a closed position, the door comprising the inlet (inlet door) contacts the first seal assembly of the sorbent housing module to provide at least two isolated zones between a first end of the sorbent structure and the inlet door, and the door opposing the inlet door (opposing door) contacts the second seal assembly of the sorbent housing module to provide at least one isolated zone between a second end of the sorbent structure and the opposing door. A regenerating-fluid-flow-path from the inlet to the outlet is formed when the doors are in the closed position. The regenerating-fluid-flow-path traverses from a first isolated zone of the inlet door, via a first portion of flow channels, to a first isolated zone of the opposing door and downward and subsequently back to a second isolated zone of the inlet door, via a second portion of flow channels before reaching the outlet. The second portion of flow channels being below the first portion of flow channels.

Optionally, at least one of the first seal assembly and the second seal assembly can further comprise a sealing element disposed along the perimeter of the respective face of the opening.

Optionally, the system can further comprise two or more rows of solid sorbent structures positioned in the opening and a membrane between at least two rows of the sorbent structures, preferably between all rows. Optionally, the membrane is impervious.

Optionally, at least one or both of the opposing doors comprises of at least one baffle to facilitate the regenerating-fluid-flow-path.

Optionally, the number of isolated sealed zones between the first end of the sorbent structure(s) and the inlet door can be at least four. Optionally, the number of isolated sealed zones between the second end of the sorbent structure(s) and the opposing door can be at least three.

Optionally, the system can further comprise a support structure that is moveable on a track in a direction orthogonal to the flow channels of the sorbent structure(s), where the opposing doors are fastened to the support structure. Optionally, the support structure can comprise: a pair of opposing frames (324) to which the pair of opposing doors is fastened; plurality of wheels fastened to each of the frames; and at least one connector plate fastened to each frame to facilitate uniform lateral movement of the frames.

According to another aspect, the present disclosure provides a method for regenerating one or more saturated sorbent structure(s) in a direct air capture (DAC) system,. The method comprises providing an embodiment of the sorbent housing and regenerating system described herein; actuating the opposing doors to a closed position to form the respective isolated zones; providing a regenerating fluid from the inlet at a pressure greater than or equal to ambient atmospheric pressure into the housing; and moving at least part of the regenerating fluid from the inlet to the outlet at least via the regenerating-fluid-flow-path, where the regenerating fluid traverses from a first isolated zone of the inlet door to a first isolated zone of the opposing door, via a first portion of the flow channels and downward and subsequently back to a second isolated zone of the inlet door, via a second portion of flow channels, before reaching the outlet, wherein the second portion of flow channels being below the first portion.

Optionally, the method further comprises moving the regenerating fluid from the second isolated zone of the inlet door to a second isolated zone of the opposing door, via a third portion of flow channels, and downward and back to a third isolated zone of the inlet door, via a fourth portion of flow channels before reaching the outlet, wherein the third portion of flow channels are below the fourth portion of flow channels.

Optionally, the step of providing the regenerating fluid comprises providing steam having a pressure of 1.0 to 1.1 bar/100 to 110 KPa (14.5 to 16.0 psi), and at a temperature in a range from 100 and up to 150 degrees C, preferably from 110 and up to 130 °C to the sorbent structures. Optionally, the gas mixture consists essentially of ambient air.

Optionally, the selected gas comprises CO₂. Optionally, the concentration of the CO₂ in the gas mixture is less than 500 ppm.

### Brief Description of the Drawings

FIG. 1A depicts an illustrative perspective view of an exemplary embodiment of a sorbent housing module with sorbent according to certain aspects described herein.
FIG. 1B depicts an illustrative perspective view of the sorbent housing module of FIG. 1A without sorbent, according to certain aspects described herein.
FIG. 1C depicts an illustrative side view of an exemplary embodiment of a specified lower portion of the sorbent housing module of FIGS. 1A and 1B, according to certain aspects described herein.
FIG. 1D depicts an illustrative perspective view of an exemplary embodiment of a lower portion of the sorbent housing module of FIGS. 1A and 1B with one row of sorbent, according to certain aspects described herein.
FIG. 1E depicts an illustrative perspective view of an exemplary embodiment of a sorbent structure in FIG. 1D, according to certain aspects described herein.
FIG. 1F depicts an illustrative perspective view of an exemplary embodiment of a portion of the sorbent housing module of FIG. 1A with multiple rows of sorbent, according to certain aspects described herein.
FIG. 2A depicts an illustrative perspective view of an exemplary embodiment of a sorbent housing apparatus according to certain aspects described herein, where the sorbent housing apparatus has multiple sorbent housing modules depicted in at least FIG. 1B, according to certain aspects described herein.
FIG. 2B depicts an illustrative perspective view of an exemplary embodiment of a lower portion of a sorbent housing apparatus of at least FIG. 1B in sorbent housing apparatus, according to certain aspects described herein.
FIG. 3A depicts an illustrative perspective view of an exemplary embodiment of a regenerator unit according to certain aspects described herein.
FIG. 3B depicts an illustrative cross-sectional view of an exemplary embodiment of the regenerating unit of FIG. 3A facing the sorbent in a sorbent housing module of at least FIG. 1A, according to certain aspects described herein.

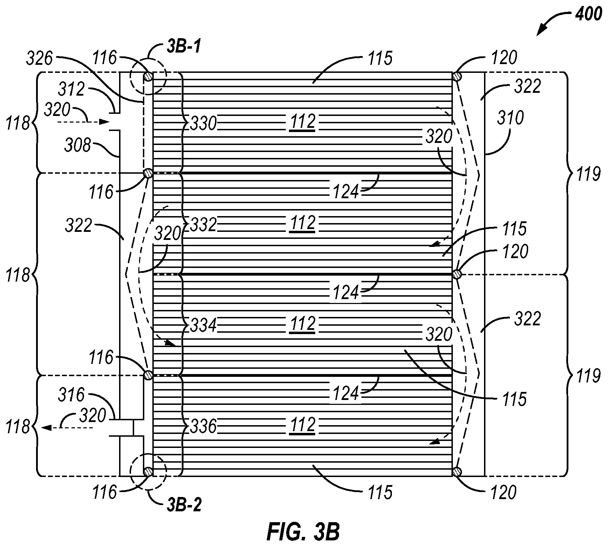

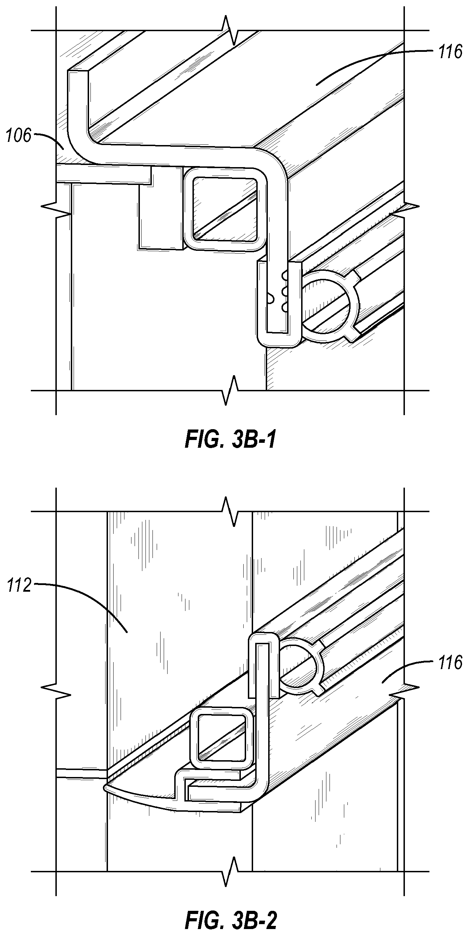

FIG. 3B-1 depicts an illustrative cross-sectional perspective view of an exemplary embodiment of a seal assembly of a sorbent housing module according to certain aspects described herein.
FIG. 3B-2 depicts an illustrative cross-sectional perspective view of another exemplary embodiment of a seal assembly of a sorbent housing module according to certain aspects described herein.

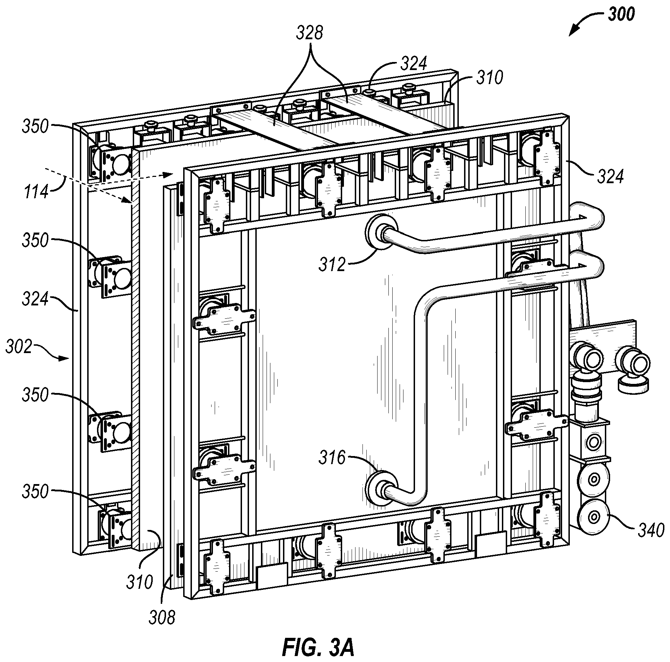

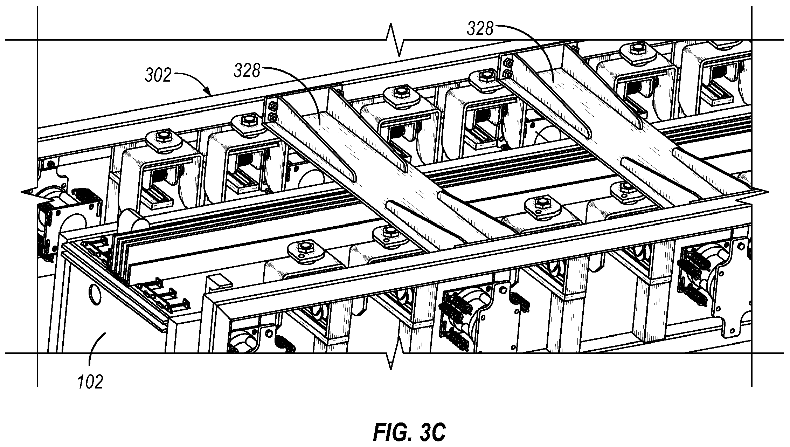

FIG. 3C depicts an illustrative perspective view of an exemplary embodiment of a top portion of the regenerator unit of at least FIG. 3A, according to certain aspects described herein.

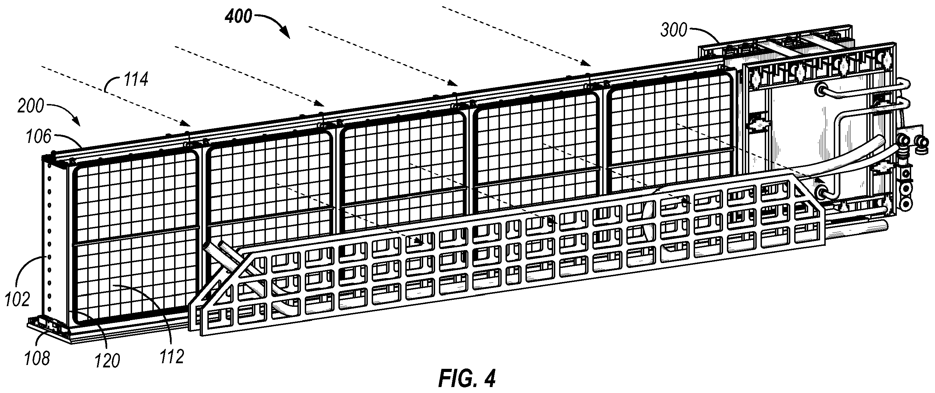

FIG. 4 depicts an illustrative perspective view of an exemplary embodiment of a system with a sorbent housing apparatus and regeneration unit, according to aspects described herein.

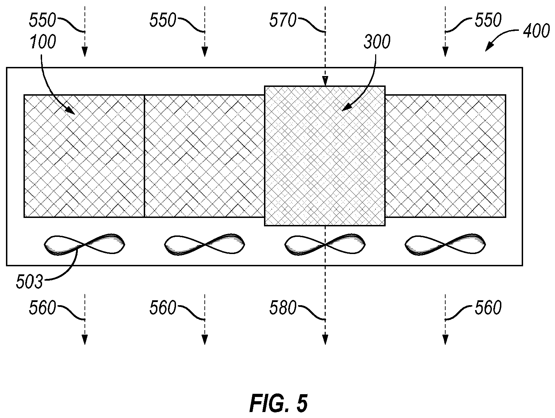

FIG. 5 illustrates a schematic representation of an exemplary DAC system in which embodiments of the systems and methods described herein can be employed.

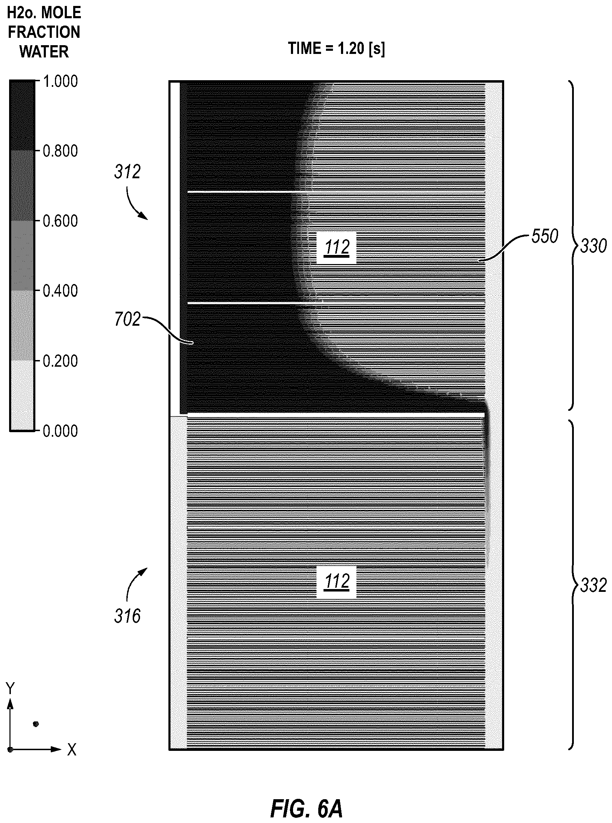

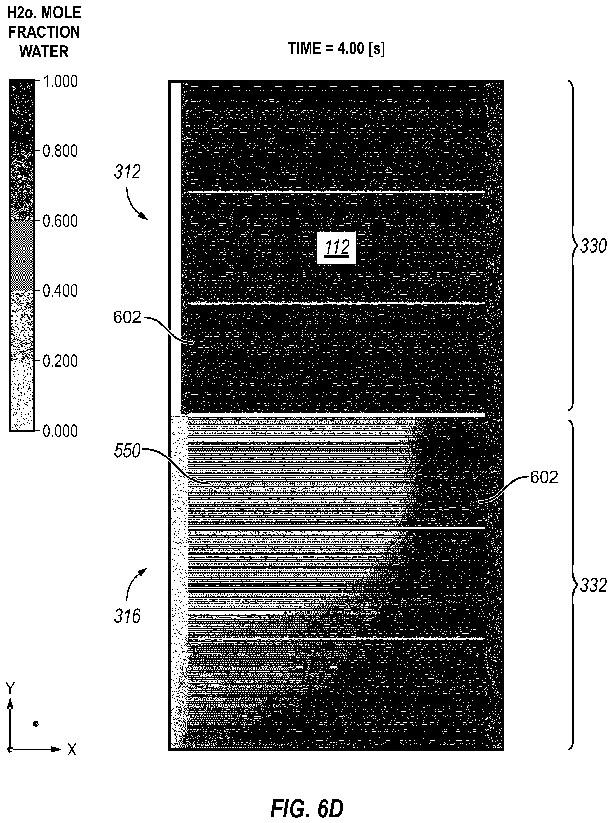

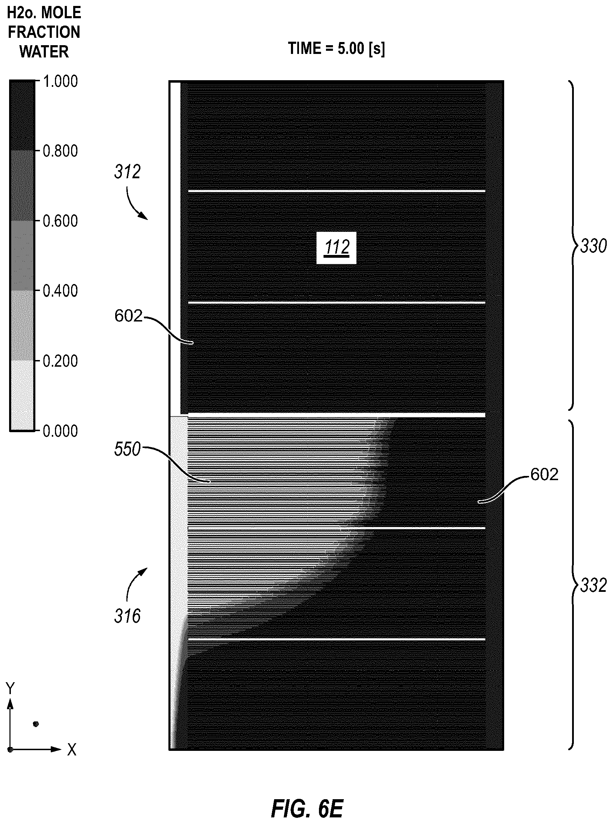

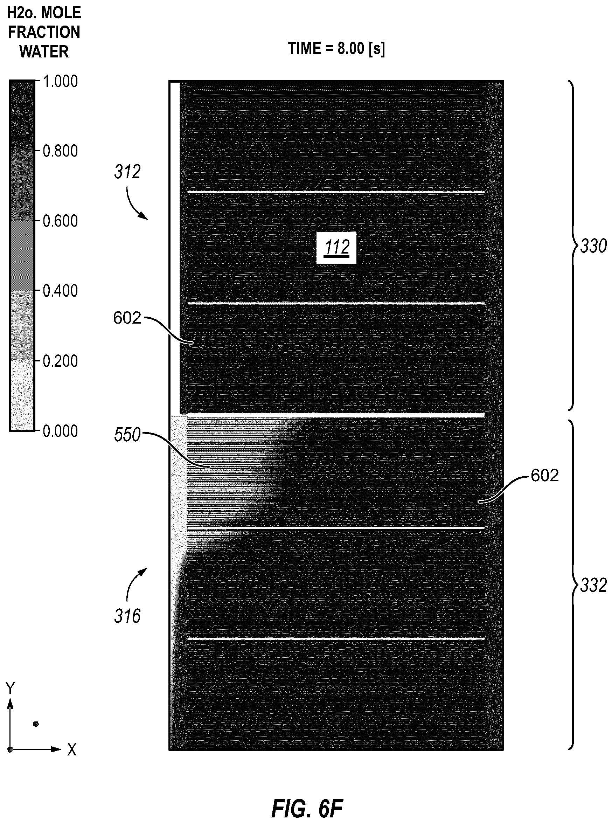

FIGS. 6A - 6G show a 2-Dimensional Computational Fluid Dynamics (2-D CFD) model, at various respective times, of a regenerating fluid following an embodiment of a regenerating-fluid-flow-path according to aspects described herein.

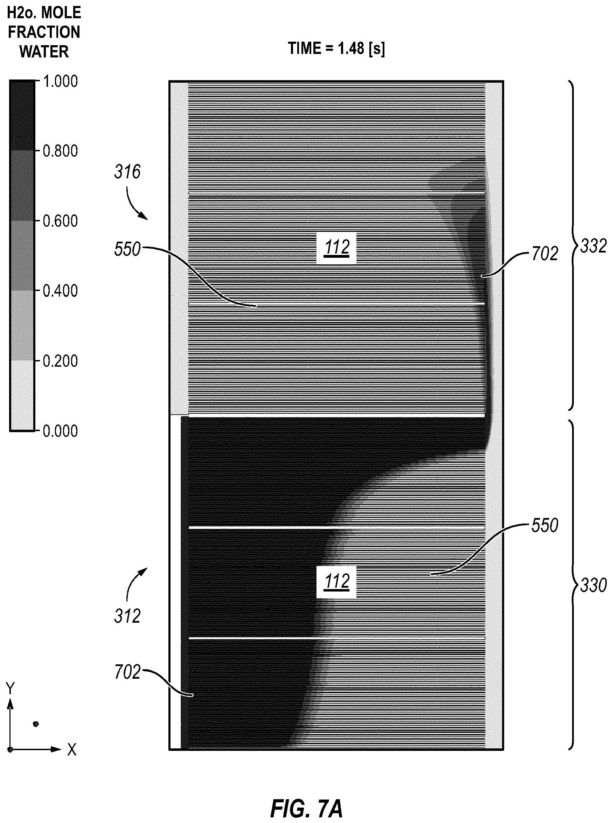

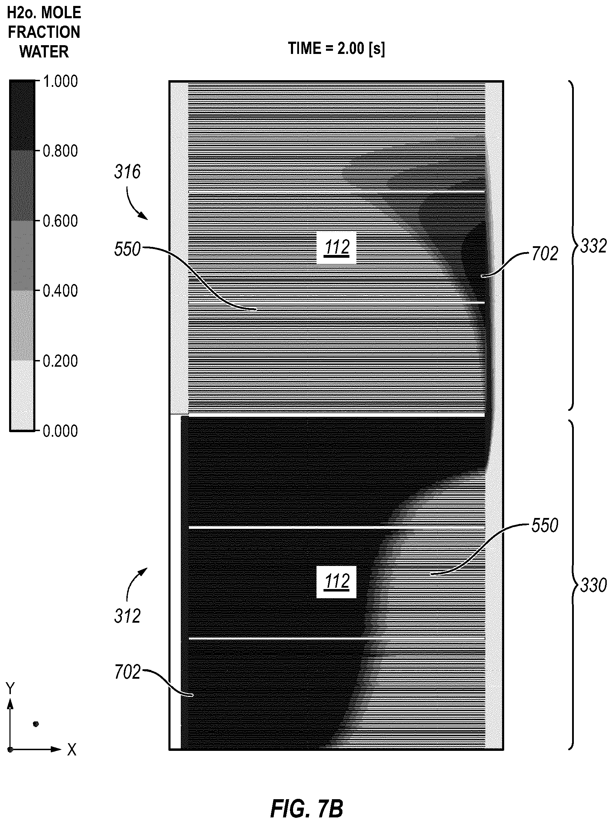

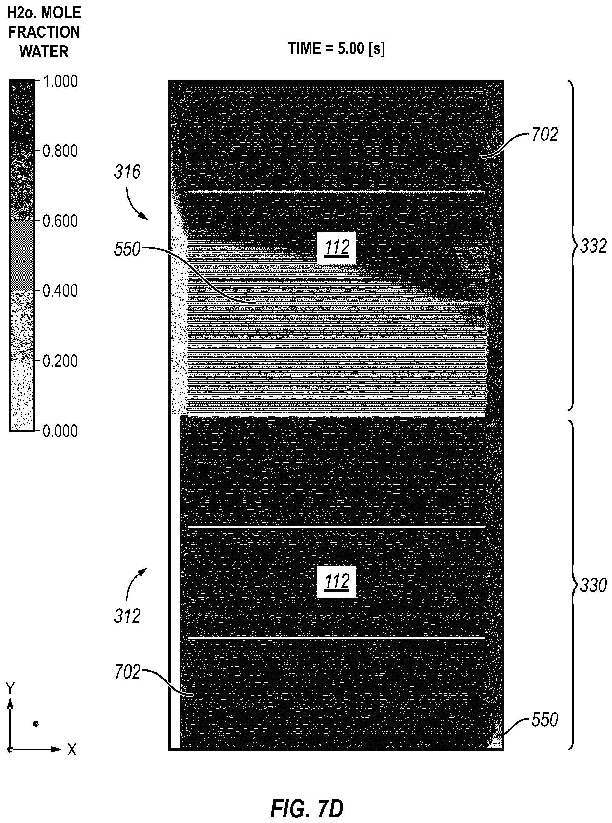

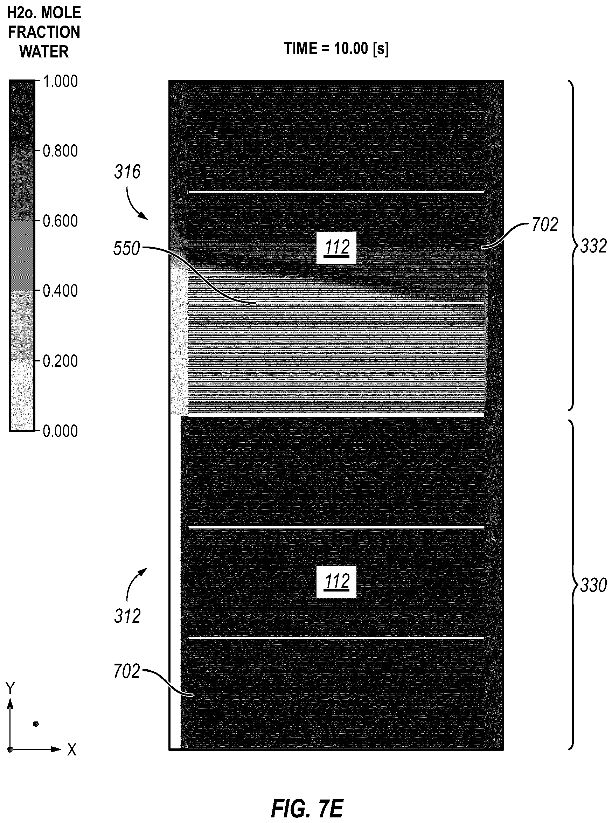

FIGS. 7A - 7F show a 2-Dimensional Computational Fluid Dynamics (2-D CFD) model, at various respective times, where a regenerating fluid flows in a direction from bottom to the top.

### Detailed Description of the Invention

The present invention will now be described in detail with reference to embodiments thereof as illustrated in the accompanying drawings. References to "one embodiment", "an embodiment" "an example embodiment", etc., indicate that the embodiment described may include a particular feature, structure, or characteristic, but every embodiment may not necessarily include the particular feature, structure, or characteristic.

Although the description herein provides numerous specific details that are set forth for a thorough understanding of illustrative embodiments, it will be apparent to one skilled in the art that embodiments may be practiced without some or all of these specific details. In other instances, well known process steps and/or structures have not been described in detail in order to not unnecessarily obscure the present invention. The features and advantages of embodiments may be better understood with reference to the drawings and discussions that follow.

In addition, when like elements are used in one or more figures, identical reference characters will be used in each figure, and a detailed description of the element will be provided only at its first occurrence. Some features or components of the systems or processes described herein may be omitted in certain depicted configurations in the interest of clarity.

For context, the present disclosure relates to systems for a direct air capture (DAC) comprising (i) a sorbent housing module to hold one or more sorbent structure(s) for capturing a selected gas from a gaseous feed stream during adsorption that loads the sorbent with the captured gas, preferably CO₂, and (ii) a regenerating unit to release or desorb the captured gas from the sorbent so it can be used to capture additional gas. Regeneration is preferably done at least by passing a gas or vapour stream, a "regenerant" or "regenerating fluid" that typically comprises steam and/or regenerated carbon dioxide, across the sorbent structures in multiple passes. Although the present disclosure refers to the regenerating fluid as steam, it is understood that the principles described herein also apply to other gas or vapour for use as the regenerating fluid. The present disclosure also provides for a method to regenerate the sorbent structure(s) in a direct air capture (DAC) system,using the sorbent housing module and regenerating unit.

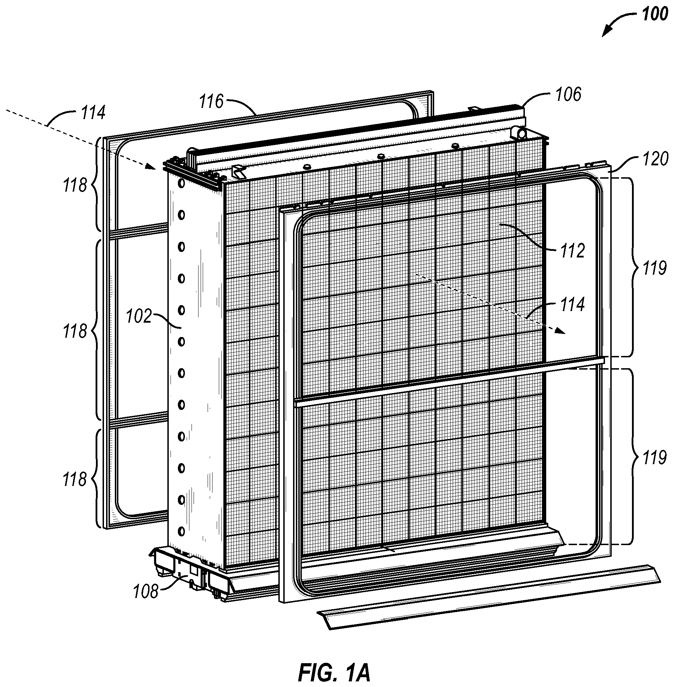

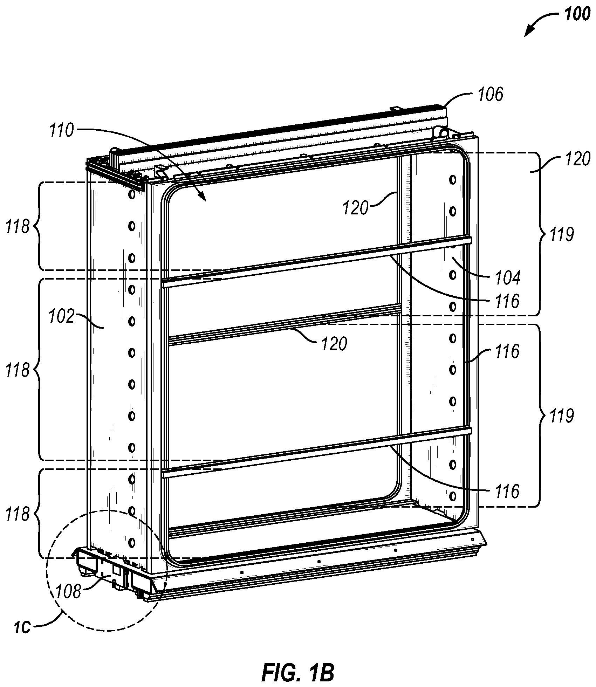

According to one aspect, there is provided a sorbent housing module to hold one or more sorbent structure(s) during adsorption and regeneration. FIGS. 1A - 1F illustrate various exemplary versions and/or views of a representation of sorbent housing module 100. FIG. 1A depicts an illustrative perspective view of an exemplary embodiment of sorbent housing module 100 with sorbent 112. FIG. 1B depicts an illustrative perspective view of sorbent housing module 100 without sorbent 112.

Sorbent housing module 100 comprises two side segments 102 and 104, top segment 106, bottom segment 108, and opening 110 comprising two opposing faces. Each of the two side segments 102 and 104, top segment 106, and bottom segment 108 can, but need not, be a contiguous piece, where for instance at least one side segment 102 or 104 can comprise a plurality of holes.

Opening 110 is defined at least by the two side segments 102 and 104 and the top and bottom segments 106 and 108. One face of opening 110 comprises a first seal assembly 116, which provides at least two, preferably at least three, and more preferably at least four, zones 118 that are isolatable from each other. For example, as shown in the relevant figures, first seal assembly 116 comprises three zones 118. The other face comprises a second seal assembly 120 providing at least one, preferably at least two, and more preferably three zones 119 that are isolatable from each other (119). For example, as shown in the relevant figures, second seal assembly 120 comprises two zones 119. Both seal assemblies 116 and 120 comprise a plurality of seal elements that extend laterally across opening 110, from one side segment (e.g., 102) to another side segment (e.g., 104). Optionally, at least one of first seal assembly 116 and the second seal assembly 120 further comprises another seal element arranged along the perimeter of opening 110. The number of laterally extending and/or perimeter seal elements can be selected based at least on the number of desired isolatable zones. As will be further described herein, isolatable zones 118 and 119 become isolated from each other when the doors of the regeneration unit (such as unit 300 in FIGS. 3A - 3C) are in the closed position. As used herein, "isolated" means a fluid (such as the regenerating fluid as described herein) does not flow directly to an adjacent zone of the same face of the opening 110. In other words, two adjacent isolated zones 118 (or similarly 119) are not in fluid communication with one another. "Isolatable" means such zones are configured to become isolated zones as described herein. For instance, a fluid does not flow directly from one isolated zone 118 to an adjacent isolated zone 118. Instead, it flows across opening 110 to zone 119 of the opposing face (via the flow channels of the sorbent structure(s), if present) in order to move to an adjacent zone 118. Similarly, a fluid does not flow directly from one isolated zone 119 to an adjacent isolated zone 119. Instead, it flows across opening 110 to zone 118 of the opposing face (via the flow channels of the sorbent structure(s), if present) in order to move to an adjacent zone 119. The seal elements of seal assemblies 116 and 120 can be made from any suitable material known to one of ordinary skill such as butyl rubber, PTFE or other polymer.

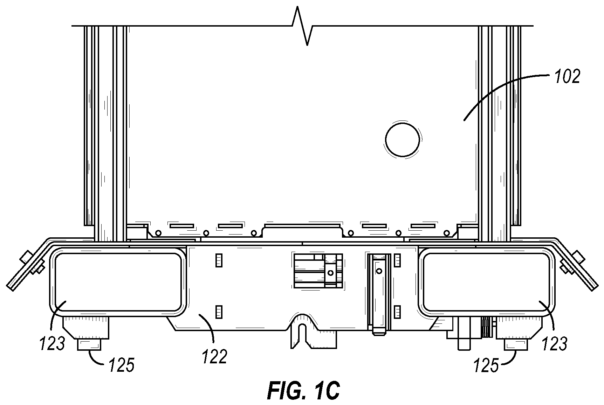

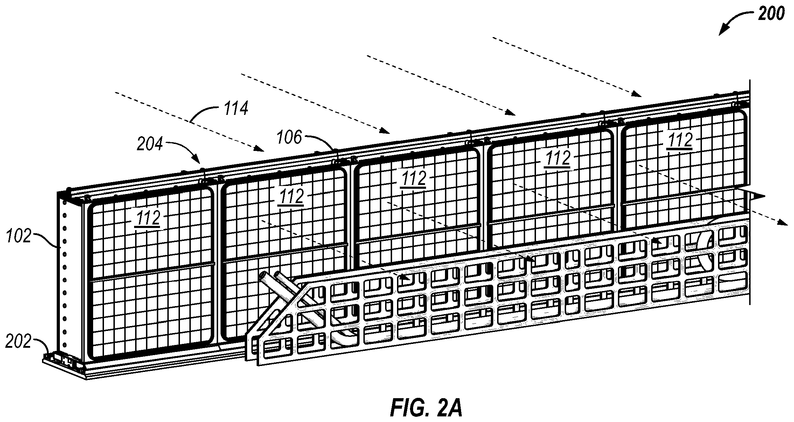

FIG. 1C depicts an illustrative side view of an exemplary embodiment of a lower portion of sorbent housing module 100 as indicated in FIG. 1B. At least one of the top segment 106 and the bottom segment 108 can comprise mount 122 comprising sliding component 125to enable the sorbent housing module 100 to be moved along track 202 of the sorbent housing apparatus 200 shown in at least FIG. 2A. As shown, bottom segment 108 comprises mount 122, which can further comprise forklift pockets 123. The sliding component 125 allows multiple housing modules 100 to be mounted to the track 202 and be positioned adjacent one another, such as shown in FIGS. 4A and 4B. Suitable examples of sliding component 125 can be a metal plate with a low friction element of metal or polymer attached. Suitable examples of track 202 can be metal or composite material rails. Each sorbent housing module 100 can be moved along track 202 when force is applied, such as with a motor, piston or winch.

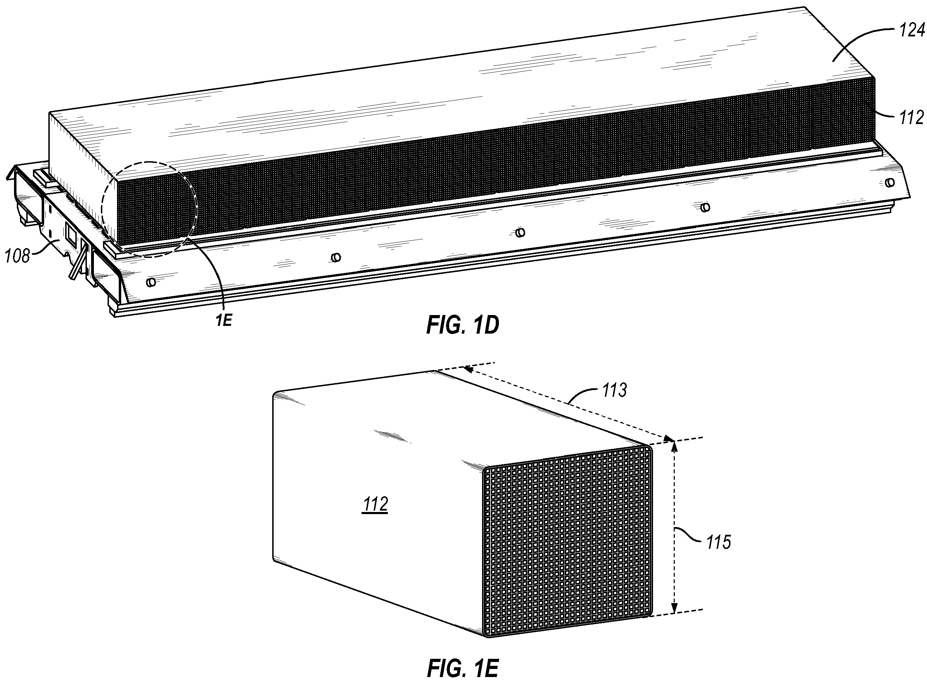

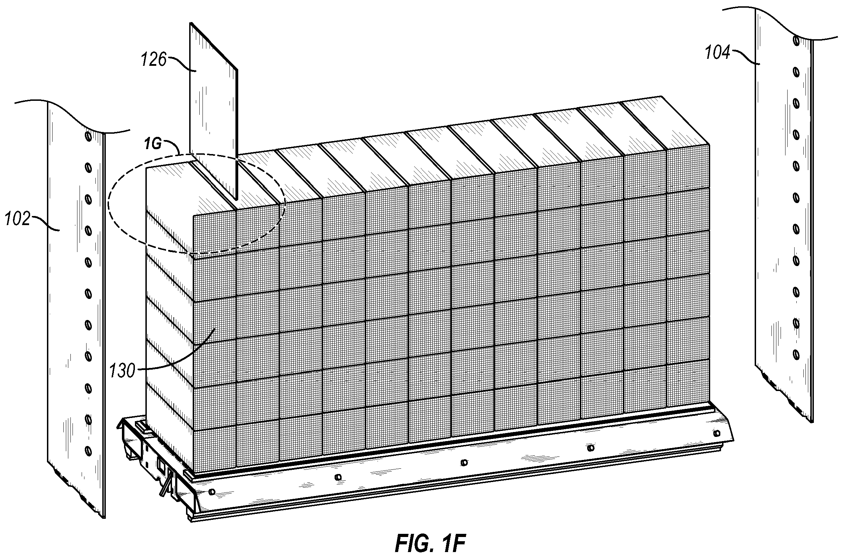

FIG. 1D depicts an illustrative perspective view of an exemplary embodiment of sorbent housing module 100 with one row of sorbent 112. FIG. 1E depicts an illustrative perspective view of an exemplary embodiment of sorbent structure 112. FIG. 1F depicts an illustrative perspective view of an exemplary embodiment of sorbent housing module 100 with multiple rows of sorbent structures 112.

Preferably, as shown in at least FIGS. 1A and 1B, opening 110 is configured to contain one or more sorbent structure(s) 112, which is preferably a rectangular monolith (such as honeycomb) comprising a plurality of flow channels extending from one side through sorbent structure 112 to the other side, such as shown in FIG. 1E. The flow channels (115 in FIG. 3B) are preferably substantially parallel to one another to facilitate flow of a gas mixture (feed gas) containing the selected gas to be captured through the sorbent structure(s) at least during adsorption. Sorbent structure(s) 112 can have any suitable dimension as known to one of ordinary skill. For instance, as can be seen in at least FIGS. 1D and 1E, one sorbent structure 112 can have a length 113 that corresponds to the depth of opening 110, extending from one side to the other side of opening 110. The width 115 of sorbent structure 112 can be varied as desired by design so as to fill opening 110 with sorbent structure(s) 112 from one side wall (e.g., 102) to another side wall (e.g., 104), as shown. The height of a sorbent structure 112 can also vary as desired. It is understood that there can be one single sorbent structure 112 to fill opening 110. Alternatively, there can be multiple rows of sorbent structures 112 stacked on top of each other to fill opening 110. As can be seen in at least FIG. 3B, sorbent structure(s) 112 are positioned in opening 110 so that the ends of flow channels of the sorbent structure align with the front and back sides of opening 110 to provide flow path 114 from one side of opening 110, through the flow channels of sorbent structure(s) 112, and to the other side of opening 110.

Sorbent structure(s) 112 is configured to capture a gas, preferably carbon dioxide, in a gaseous stream. For instance, if carbon dioxide is the selected gas, suitable sorbent structure(s) 112 can be any described in the prior art, such as comprising potassium carbonate or an amine, or other suitable sorbent materials, to capture the carbon dioxide. Suitable sorbents are described in e.g. X. Shi et al, Sorbents for the Direct Capture of CO2 from Ambient Air, Angew. Chem. Int. Ed. 2020, 59, 2 - 25. Sorbent structure 112 can comprise the amine or carbonate on mesoporous alumina (e.g. α or γ-alumina) or silica honeycomb monolith substrate or other suitable materials. Other suitable sorbent structure(s) 112 are also provided in IN202341007002 and IN202341006950.

Optionally, in one embodiment as shown at least in FIG. 1C, bottom segment 108 comprises the bottom mount 122, which further comprises a pair of forklift pockets 123. Having the forklift pockets 123 allows the respective sorbent housing module 100, when not mounted to tracks 202 to be moved from one location to another using forklifts.

When sorbent housing module 100 comprises at least two (multiple) rows of sorbent structures 112 positioned in opening 110, sorbent housing module 100 preferably further comprises membrane 124 positioned between at least two rows of the sorbent structures 112, preferably between all rows. If employed, membrane 124 preferably provides support to maintain the rows of sorbent structures 112 in opening 110. Membrane 124 can be pervious or impervious. As used herein, the term "pervious" has its ordinary meaning, which generally means able to allow gas or vapour to pass and "impervious" has its ordinary meaning, which generally means unable to allow gas or vapour to pass. Suitable materials for membrane 124 include open or closed EPDM foams or ceramic matting.

Preferably, sorbent housing module 100 can have suitable dimensions to support large scale adsorption. For instance, it can be in a range from 1 to 3 meters wide by 1 to 3 meters high, such as 2 meters by 2 meters.

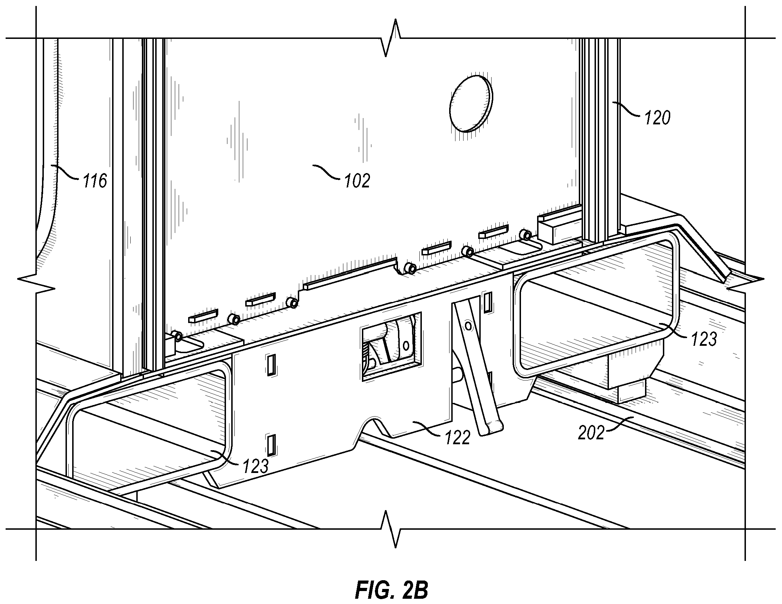

According to another aspect, there is provided a sorbent housing apparatus comprising two or more sorbent housing modules to hold one or more sorbent structure(s) during adsorption and regeneration. FIG. 2A depicts an illustrative perspective view of an exemplary embodiment of sorbent housing apparatus 200 comprising two or more sorbent housing modules 100. FIG. 2B depicts an illustrative perspective view of an exemplary embodiment of a lower portion of sorbent housing apparatus 200. Sorbent housing module 200 further comprises tracks 202. Suitable tracks 202 include rails of metal or composite material.

At least FIG. 2A depicts an embodiment of two or more sorbent housing modules 100 mounted on tracks 202 such that a side wall of one sorbent housing module 100 is adjacent a side wall of another sorbent housing module 100. Sorbent housing apparatus 200 can comprise any suitable number of sorbent housing modules 100, preferably at least six, such as eight or more, sorbent housing modules 100.

The sorbent housing apparatus 200 can further comprise a motor component and wires (not shown) to move the sorbent housing modules 100 along the tracks 202. Suitable motor component and wires include an electric motor driving a capstan around which a wire is tensioned and connected to a fixture on the sorbent housing module.

Preferably, sorbent housing modules 100 are mounted on tracks 202 such that they do not touch each other. That is, sorbent housing apparatus 200 further comprises a distance 204 between adjacent sliding housing modules 100. Optionally, the distance is at least 1 mm.

Preferably, sorbent housing apparatus 200 can have suitable dimensions to support large scale adsorption. For instance, a typical sorbent housing apparatus can be 5 to 20 meters long by 1 to 3 meters high, such as 12 meters by 2 meters.

According to another aspect, there is provided a method for capturing a selected gas from a gas mixture. The method comprises providing a suitable number (such as two or more, preferably four or more, more preferably eight or more) of an embodiment of the sorbent housing apparatus as described herein, such as 200. Opening 110 of at least one sorbent housing module 100 contains one or more suitable sorbent structure(s) 112 configured to capture a selected gas from a gas mixture, preferably a monolith configured to capture carbon dioxide from ambient air and/or where the CO₂ in the gas mixture is less than 500 ppm. Examples of the one or more sorbent structure(s) are described elsewhere in this disclosure and are not repeated here for the sake of simplicity. The sorbent structure(s) 112 comprise a plurality of flow channels extending from one face of the sorbent structure(s) 112 to another face. The sorbent structure(s) 112 are arranged in opening 110 to provide a fluid flow path through the flow channels from one side of opening 110 to the other side of opening 110. The method further comprises passing a gas mixture comprising the selected gas through the sorbent structure(s) 112 along at least the fluid flow path to capture the selected gas from the gas mixture.

According to another aspect, the present disclosure provides a regenerating unit to regenerate one or more sorbent structure(s) saturated with adsorbed carbon dioxide. FIGS. 3A and 3B depict various views of an illustration of one exemplary embodiment of the regenerating (or regeneration) unit, unit 300, which also may be referred to as regeneration unit. In particular, FIG. 3A shows a perspective view of regenerating unit 300 and FIG. 3B shows a cross-sectional view when the regenerating unit 300 faces sorbent housing module 100. FIG. 4 shows one exemplary embodiment of system 400, which comprises regenerating unit 300 arranged to regenerate six sorbent housing modules 100 of apparatus 200, each module 100 with sorbent structure(s) 112 in its respective opening 110.

Referring to at least FIGS. 3A and 3B, regenerating unit 300 comprises a pair of opposing doors 308 and 310, each facing a respective side of a sorbent housing module (such as module 100) holding one or more sorbent structure(s) comprising a plurality of flow channels, wherein the sorbent structure(s) are arranged in the sorbent housing module such that the flow channels extend from one side to the other side of the sorbent housing module, and correspondingly from one door to another when the doors are in a closed position. Referring to FIGS. 3A and 3B, one door (either 308 or 310) comprises an inlet 312 near the top portion of the respective door for a regenerating fluid to be provided to the sorbent housing module. As shown in FIG. 3B, with inlet 312 being located near a top portion of the respective door (308 as shown), the regenerating fluid can be provided to the top portion of the plurality of flow channels of the sorbent structure 112. One door comprises an outlet 316 near a bottom portion of the respective door for the regenerating fluid to exit the sorbent housing module 100. As shown in FIG. 3B, with outlet 316 being located near a bottom portion of the respective door (308 as shown), the outlet is also located near a bottom portion of the plurality of flow channels of the sorbent structure 112, and the regenerating fluid can exit the sorbent housing module 100 through the outlet 316. In other words, outlet 316 is located below inlet 312. Preferably, as shown in FIGS. 3A and 3B, one door (such as 308) comprises both the inlet 312 and the outlet 316.

FIG. 3B-1 depicts an illustrative cross-sectional perspective view of an exemplary embodiment of the seal elements of seal assembly 116 (or 120), preferably attached to top segment 106 (or it can be suitably modified to be attached to bottom segment 108). FIG. 3B-2 depicts an illustrative cross-sectional perspective view of an exemplary embodiment of seal elements of seal assembly 116 (or 120), preferably in the middle portion of sorbent housing module 100. Suitably, the dimensions of regenerating unit 300 generally corresponds to sorbent housing module 100.

Referring to FIG. 3B, in a closed position, inlet door 308 contacts seal assembly 116 of the respective face of sorbent housing module 100 to provide at least two (such as three as shown) isolated zones 118 between a first end of the sorbent structure 112 and the inlet door 308. Also in a closed position, door 310 opposing inlet door 308 contacts seal assembly 120 of the respective face of sorbent housing module 100 to provide at least one isolated zone 119 between a second end of sorbent structure 112 and the opposing door 310. There are two isolated zones 119 shown in FIG. 3B.

As can be seen in FIG. 3B, there are four portions 330, 332, 334, and 336 of sorbent structure(s) 112 and their corresponding flow channels 115, which are stacked vertically on top of each other. Because zones 118 are isolated from each other, they are not in fluid communication with one another. As such, each of zone 118 is in fluid communication with a different portion of flow channels 115 than another zone 118. For instance, the top isolated zone 118 is in fluid communication with top portion 330 while middle isolated zone 118 is in fluid communication with middle portions 332 and 334 and bottom isolated zone 118 is in fluid communication with bottom portion 336.

Similarly, zones 119 are not in fluid communication with one another. As such, each of zone 119 is in fluid communication with a different portion of flow channels 115 than another zone 119. For instance, the top zone 119 is in fluid communication with portions 330 and 332 and the bottom zone 119 is in fluid communication with portions 334 and 336. By providing isolated zones 118 and 119 and the fluid communication with the portions of flow channels 115 as described, regenerating-fluid-flow-path 320 from the inlet 312 to the outlet 316 is formed during the closed position, i.e., when the doors 308 and 310 close around module 100. The regenerating-fluid-flow-path 320 flows from the inlet door 308 through a first portion 330 of flow channels of sorbent structure(s) 112 adjacent to the inlet 112, into isolation zone 119 and downward to and through at least a second portion 332 of the flow channels below the first portion 330 and into isolation zone 119 to travel downward to another portion of flow channels before reaching the outlet 316. The direction of flow through the second portion 332 is from the opposing door (310 as shown) to the inlet door (308 as shown). Referring to FIG. 3B, the first portion 330 is the top portion of flow channels of the sorbent structure 112. As shown in FIG. 3B, regenerating-fluid-flow-path 320 continues downward to and through a third portion 334 of flow channels below the second portion 332. The direction of flow through the third portion 334 is from the inlet door (308 as shown) to the opposing door (310 as shown). The regenerating-fluid-flow-path 320 subsequently continues downward to and through a fourth portion 336 below the third portion 334. The direction of flow through the fourth portion 336 is from the opposing door (310 as shown) to the inlet door (308 as shown) and from zone 118 to zone 119 or vice versa rather than from one zone 118 to another zone 118 or from one zone 119 to another zone 119.

Surprisingly it has been found that providing the regenerating fluid via at least the regenerating-fluid-flow-path 320 results in a stream comprising a high purity of the desorbed selected gas captured in the sorbent structure(s) as compared to a regenerating-fluid-flow-path that does not have the top to bottom direction and the passing multiple times between the doors through the flow channels. As used herein, "high purity" means greater than 95 % volume, preferably greater than 99 % volume, more preferably greater than 99.9 % volume, all on a water-free basis. The portion of the exit stream 580 that comprises a high purity of the desorbed selected gas is desirable because the regeneration exit stream can be provided to other downstream applications that require such high purity with minimal additional processing. Suitable downstream applications include storage and feed to other processes for production of for example e-fuels or chemicals when the selected gas is carbon dioxide. Minimal additional processing includes condensing the steam to separate water from the regeneration exit stream to provide the remaining carbon dioxide gas in high purity. If the regeneration exit stream has a lower purity of the selected gas, such as when carbon dioxide is mixed with air which contains other gases, such as nitrogen and oxygen, then further processing is likely needed to separate the carbon dioxide from the other gases, which can be challenging and requires additional resources.

At the start of regeneration, the regenerating fluid is introduced via the inlet 170 and will displace incumbent entrained feed gas (550 in FIG. 5) in the sorbent structure(s) (displaced feed gas 690). The feed gas, which is preferably air, needs to be displaced without mixing with the desorbed carbon dioxide in the introduced regenerating fluid to achieve the high purity. As described in PCT/EP2022/081442, the regenerating-fluid-flow-path 320 gives an increased velocity of the regenerating fluid because of the multiple flow paths through the flow channels of the sorbent structure(s).

In addition, the top to bottom direction is of importance in minimizing the mixing of the displaced feed gas and the regenerating fluid comprising the desorbed gas. As used herein, the terms "top" and "bottom" has its ordinary meaning and refer to relative positions with respect to the ground. For instance, "top" is farther away from the ground than "bottom." FIGS. 6A - 6G show a 2-Dimensional Computational Fluid Dynamics (2-D CFD) model of steam as the regenerating fluid traveling through the flow channels of the sorbent structure(s) following an embodiment of the regenerating-fluid-flow-path 320 as described herein, at various times. The 2-D CFD model was created using a commercially available, multi-physics modelling software Ansys Fluent, which was used to compute the fluid flow patterns and regenerating fluid concentration profiles for the regenerating fluid flow through the flow channels of the sorbent structure. FIGS. 7A - 7F show a 2D CFD model of steam as the regenerating fluid traveling through the flow channels of similar sorbent structure(s) as those of FIGS. 6A - 6H at various times, except from the bottom to the top and still passing through the flow channels multiple times. The grayscale of 1.000 water mole fraction corresponds to stream 702 comprising the regenerating fluid being steam and desorbed gas, which is preferably carbon dioxide. At the other extreme, the water mole fraction of zero corresponds to displaced feed gas 550. Other shades in between correspond to a respective mixture of stream 702 and the displaced feed gas 550.

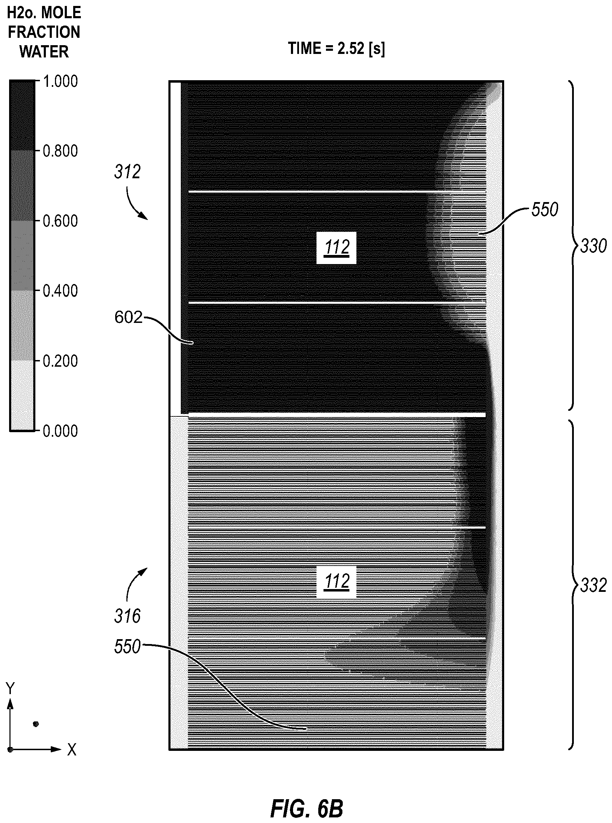

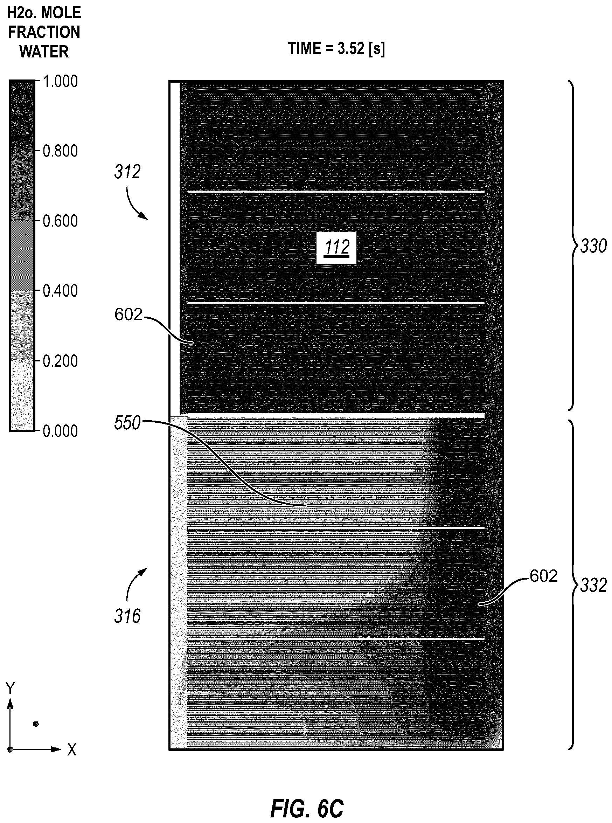

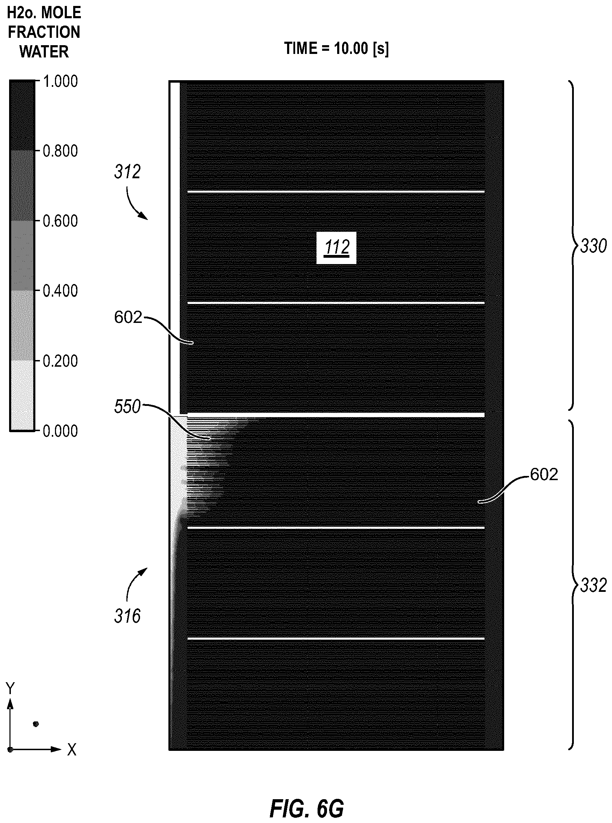

FIGS. 6A and 6B show, at times 1.2 seconds and 2.52 seconds after the regenerating fluid is introduced, respectively, the regenerating fluid stream (comprising the desorbed gas) 602 advancing through a first portion 330 of flow channels, away from the inlet 312 and toward the opposing door, thereby displacing the entrained feed gas 550. The front of stream 602 begins to move to a second portion 332 of flow channels below the first portion 330. FIGS. 6C - 6G show, at times 3.52 seconds, 4.0 seconds, 5.0 seconds, 8.0 seconds, and 10 seconds after the regenerating fluid is introduced, respectively, the stream 602 continues downward to and through the second portion 332 of the flow channels back toward the inlet door to displace the entrained feed gas. The second portion 332 is below the first portion 330. The displaced feed gas 550 exits, via at least outlet 316, the sorbent housing module 100 first, followed by stream 602. Although not depicted, there can be additional portions of flow channels below second portion 332 through which the displaced air 550 and stream 602 travel before exiting via outlet 316. FIG. 6G shows that at 10 seconds after the regenerating fluid is introduced, stream 602 essentially fully displaces the entrained feed gas. FIG. 6G indicates that for the embodiment in this figure, the regeneration exit stream from outlet 316 after 10 seconds comprises the desorbed gas at high purity level with minimal contamination from the feed gas.

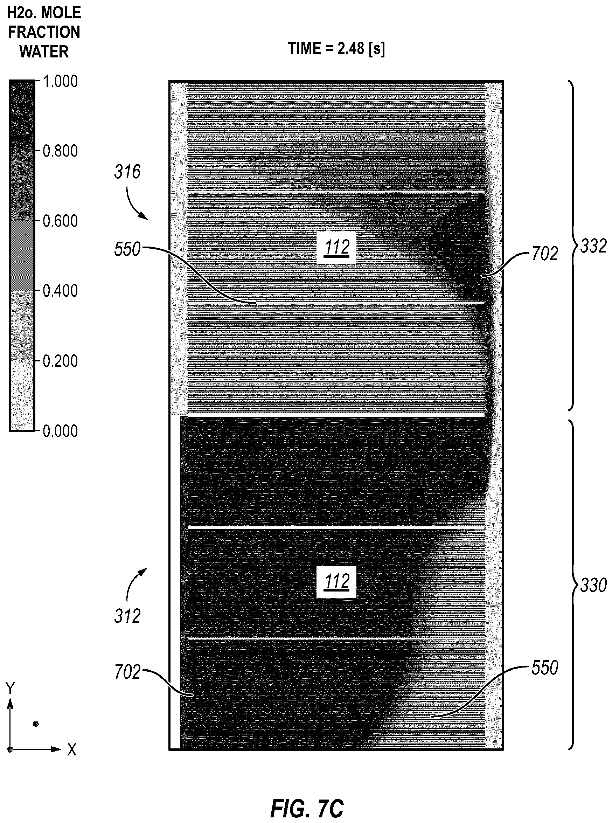

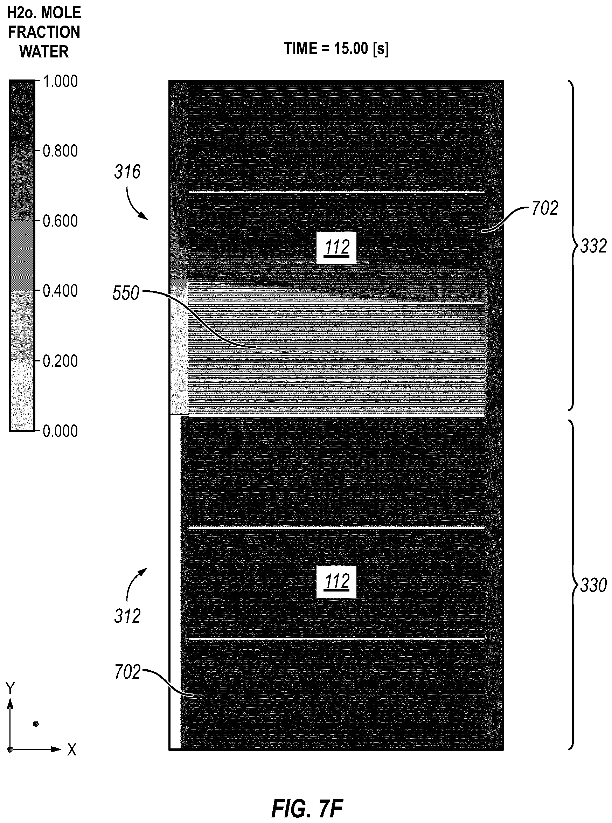

This result, however, is not achieved if the inlet is placed near the bottom and the outlet is placed near the top to provide a regenerating-fluid-flow-path from bottom to top. Similar to FIGS. 6A - 6G, for FIGS. 7A - 7F, the grayscale of 1.000 water mole fraction corresponds to stream 702 comprising the regenerating fluid being steam and desorbed gas, which is preferably carbon dioxide. At the other extreme, the water mole fraction of zero corresponds to displaced feed gas 550. Other shades in between correspond to a respective mixture of stream 702 and the displaced feed gas 550. FIGS. 7A - 7B show, at times 1.48 seconds and 2.0 seconds after the regenerating fluid is introduced, respectively, the regenerating fluid stream (comprising the desorbed gas) 702 advancing through a first portion 330 of flow channels, away from the inlet 312 and toward the opposing door, thereby displacing the entrained feed gas. The front of stream 702 begins to move to upward to a second portion 332 of flow channels above the first portion 330. FIGS. 7C - 7E show, at times 2.48 seconds, 5 seconds, and 10 seconds after the regenerating fluid is introduced, respectively, the stream 702 continues upward to and through the second portion 332 of the flow channels back toward the inlet door to displace the entrained feed gas. The second portion 332 is above the first portion 330. The displaced feed gas 550 exits the sorbent housing module 100 first, followed by stream 802. FIG. 7F shows, at time 15 seconds after the regenerating fluid is introduced, stream 802 still does not completely displace the entrained feed gas where there is a pocket of trapped feed gas in the sorbent structure(s). It is expected that the regeneration exit stream for the scenario in FIGS. 7A - 7F continues to contain some feed gas after the initial vent period to displace the feed gas, which leads to contamination of the regeneration exit stream.

Optionally and preferably, referring to FIG. 3B, doors 308 and 310 each further comprises baffles 322 as described in this disclosure elsewhere that align with the respective seal assemblies of the sorbent housing module 100 to further suppress fluid mixing due to dynamic pressure effects and maintains the velocity of the fluid flow relatively constant.

Referring to FIGS. 3A and 3C, regenerating unit 300 can further comprises a support structure 302 that is moveable (such as via wheels 340) in a direction orthogonal (depicted as dotted arrow 304) to fluid flow path 114 of one or more saturated sorbent structure(s) to be regenerated. Opposing doors 308 and 310 are fastened to the support structure 302 to provide the doors (308, 310) with concurrent orthogonal movement when the support structure is moved. Doors 308 and 310 are configured to actuate between a closed position and an open position. To move into the closed position, doors 308 and 310 move along a direction parallel to the direction of fluid flow path 114 toward each other until they come in contact with respective side of the sorbent housing module 100. To move into the open position, doors 308 and 310 move away from each other and the respective sides of the sorbent housing module 100.

FIG. 5 illustrates a schematic representation of an exemplary system 400 in which embodiments described herein can be employed when the selected gas for capture is carbon dioxide. Feed gas 550 comprising carbon dioxide is drawn through the flow channels of the sorbent structure(s) by suitable equipment, such as impellers 503, such as fans. Typically, feed gas 550 is air but in embodiments of the invention it may comprise a conditioned gas enriched with carbon dioxide, such as a flue exhaust gas from an industrial or biological process. Optionally, the concentration of carbon dioxide in feed gas 550 is less than 500 ppm. As the feed gas 550 passes across the surfaces comprised within the monolith, at least a portion of the carbon dioxide reacts with the sorbent structure(s) and is captured, thereby providing carbon dioxide depleted gas 560 leaving the sorbent structure(s) and vented to the atmosphere. Eventually as the sorbent material approaches desired saturation with adsorbed carbon dioxide there is a need to regenerate the sorbent material and strip away the carbon dioxide.

Inlet 312 (not shown in FIG. 5) is in fluid communication with a source of a regenerating fluid, such as via a steam line 570 if the regenerating fluid consists essentially of steam. In such an embodiment, typically, the steam may be derived from an external heat exchange system that is able to heat a supply of water by way of a boiler and generate steam as the output. The steam may also be obtained as output from a back pressure turbine or reclaimed from one or more parallel industrial processing apparatus and systems that generate excess or waste energy, suitably in the form of thermal energy, such as comprised within steam or other heated fluids. Referring to at least FIG. 3B, the regenerating fluid is preferably provided to sorbent structures 112 at slightly elevated pressure just above atmospheric pressure (e.g. >1 bar), suitably in a range from 1.0 to 1.1 bar/100 to 110 KPa (or 14.5 to 16.0 psi), and at a temperature in a range from 100 and up to 150 degrees C, preferably from 110 and up to 130 °C. The conditions of the regenerating fluid may be achieved by providing the regenerating fluid under these conditions directly from an upstream system, via inlet 312 into sorbent structures 112. Alternatively or additionally, the regenerating fluid under higher pressure may be provided to a pressure reducing device (such as a valve), which reduces the pressure of the regenerating fluid to the recited range prior to providing it, via inlet 312 into the sorbent structure(s) 112. Preferably, the sorbent structure(s) are regenerated at least via temperature-swing adsorption (TSA) rather than pressure-swing adsorption (PSA).

Referring to FIG. 5, outlet 316 (not shown in FIG. 5) is in fluid communication with a vent line for exit stream 580 that can optionally comprise a vacuum pump 504, which is particularly suitable if the regenerating fluid is drawn into housing module 100 via reduction of pressure.

The outlet 316 receives the regenerating gas containing the desorbed carbon dioxide after it has travelled through the sorbent structure(s) via at least regenerating-fluid-flow-path 320. The outlet 316 may also comprise a manifold arrangement to ensure collection of displaced air, at first, followed by the exhaust mixture of stripped carbon dioxide and steam. Referring to FIG. 5, displaced feed gas 550 may be vented to the atmosphere via a three-way valve 505 downstream of the vent line 585. The exhaust mixture of stripped carbon dioxide and steam 595 may be passed through a heat exchange system to produce condensate that is removed as water and recycled for steam generation. The remaining concentrated carbon dioxide gas stream may be subjected to further processing before it is conveyed out of the DAC unit where it may be utilised in a range of industrial/agricultural processes or stored or sequestered as necessary.

Referring to FIG. 3B, at least one or both of the opposing doors comprises of at least one baffle or internals 322 to facilitate the flow through the regenerating-fluid-flow-path 320, particularly in the vertical direction. Preferably, the regenerating-fluid-flow-path 320 traverses from the front-side door 308 to the back-side door at least two times and from the back-side door 310 to the front-side door 308 at least two times. Suitable baffles are known to one of ordinary skill in the art.

Referring to FIGS. 3A and 3C, optionally, support structure 302 can comprise a pair of opposing frames 324 to which the pair of opposing doors, 308 and 310, is fastened. Referring at least to FIG. 3A, the support structure 302 can further comprises a conveying mechanism, such as a plurality of wheels (340) fastened to each of the frames, preferably near the bottom of the frames 324, and at least one connector plate 328 fastened to each frame to facilitate uniform lateral movement in direction 304 (shown in FIG. 3A) of the frames 324.

In an optional embodiment, each frame 324 comprises a plurality of actuators 350 fastened to the respective door to enable the doors 308 and 310 to transition between the open and closed positions in the direction parallel to the fluid flow path direction 114. Suitable actuators are known to one of ordinary skill in the art.

Optionally, an embodiment of the regenerating unit can further comprise a motor to facilitate the lateral movement of the support structure 302. Suitable motors are known to one of ordinary skill and can further include a control mechanism to control the movement of support structure 302 as desired.

Referring to FIG. 3B, optionally, an embodiment of the regenerating unit can further comprise a perforated baffle plate 326 or porous plate downstream of inlet 312 at least to ensure even dispersion of regenerating fluid being supplied to the sorbent structure(s). Alternatively, the inlet 312 may provide the regenerating fluid to the sorbent structure without plate 326.

According to another aspect, the present disclosure provides a method for regenerating one or more saturated sorbent structure(s). The method comprises providing an embodiment of the regenerating unit as described herein, such as unit 300 and providing sorbent housing module 100 with one or more saturated sorbent structure(s), such as structure(s) 112. The doors 308 and 310 are actuated into a closed position to provide at least two isolated zones, preferably at least three isolated zones, between to the inlet door and the first end of the sorbent structure(s) to provide at least one isolated zone, preferably at least two isolated zones, between the second end of the sorbent structure(s) and the opposing door. During at least the closed position, a regenerating fluid is provided from the inlet 312 into the sorbent housing module 100, and correspondingly the sorbent structure(s) 112 therein, at a pressure greater than or equal to, preferably greater than, ambient atmospheric pressure. As used herein, "ambient atmospheric pressure" has its ordinary meaning of about 1 atm, where about can be +/ 5%. Optionally, as noted elsewhere in the present disclosure, the generating fluid is preferably provided to sorbent structures 112 from inlet 312 at a pressure in a range from 1.0 to 1.1 bar/100 to 110 KPa (or 14.5 to 16.0 psi), and at a temperature in a range from 100 and up to 150 degrees C, preferably from 110 and up to 130 °C. This can be done by providing the regenerating fluid with these conditions directly to the sorbent structures, or the regenerating fluid can be provided from an upstream system at a higher pressure, which undergoes pressure reduction to a pressure in the recited range prior to being provided, via inlet 312 to the sorbent structures.. Preferably, the selected gas is carbon dioxide and the feed gas is ambient air.

At least part of the regenerating fluid moves through the flow channels of the saturated sorbent structure(s) 112 from the inlet 312 to the outlet 316, following at least the regenerating-fluid-flow-path 320 as described in the present disclosure. As the regenerating fluid moves through the flow channels, the selected gas, such as carbon dioxide, desorbs and is carried out of the sorbent structure(s) 112 by the regenerating fluid as described herein. The regenerating fluid is provided as stream flowing through the flow channels of the saturated sorbent structure(s) 112 for a period of time until the desired level of desorption is reached. One of ordinary skill can select the desired flow rate and duration to achieve such desired level of desorption.

The exit stream 580 can be monitored, such as with sensors (such as carbon dioxide sensors or oxygen sensors) to determine when the exit stream comprises mostly of the entrained feed gas 550 transitions to it comprises the selected gas in high purity. Knowing when the composition changes allows for routing of the various portions of the exit stream. For instance, the portion that comprises mostly of the entrained gas can be released into the atmosphere, if the feed gas is air, while the latter portion of the exit stream can be routed for further downstream processing and/or applications.

According to another aspect, sorbent housing module 100 and regeneration unit 300 are preferably used together for the full process of adsorption and regeneration. For the sake of clarity and simplicity, all the details related to the sorbent housing module and regeneration unit provided elsewhere in this disclosure are understood to apply similarly here without being repeated verbatim. For instance, referring to at least FIGS. 1A - 1C and FIGS. 4 and 5, there is provided a sorbent housing and regenerating system 400, which comprises a sorbent housing module 100, which comprises two side segments 102 and 104, a top segment 106, a bottom segment 108, an opening 110 that comprises two opposing faces, the opening 110 being defined at least by the two side segments 102 and 104, top segment 106, and bottom segment 108. A first face of the opening 110 comprises a first seal assembly 116. The opposing face of the opening 110 comprises a second seal assembly 120. System 400 further comprises one or more sorbent structure(s) 112 to capture a selected gas from a gas mixture. Referring to at least FIG. 1E, the one or more sorbent structure(s) 112 comprises a plurality of flow channels 115. Referring at least to FIG. 3B, the one or more sorbent structure(s) 112 are arranged in the opening of housing module 100 such that the flow channels 115 extend from one face to the other opposing face of the opening, and correspondingly from one door (such as 308) to another door (such as 310) when the doors are in a closed position.

Referring at least to FIGS. 3A - 3B and 4A and 4B, system 400 further comprises a regenerating unit 300 comprising a pair of opposing doors (308 and 310). Each door faces a respective face of opening 110 of sorbent housing module 100. One door (308 as shown) comprises inlet 312 to provide a regenerating fluid to the sorbent housing module 100. One door (310 as shown) comprises outlet 316 for the regenerating fluid to exit the sorbent housing module 100. As can be seen, the inlet 312 is located near a top portion of door 308, and the outlet 316 is located near a bottom portion of door 308.

Referring to at least FIG. 3B, when the doors are in a closed position, the door comprising the inlet (inlet door - 308 as shown) contacts the first seal assembly 116 of the sorbent housing module to provide at least two isolated zones 118 (as shown, three isolated zones 118) between a first end of the sorbent structure and the inlet door. The door opposing the inlet door (310 as shown) contacts the second seal assembly 120 of the sorbent housing module 100 to provide at least one isolated zone 119 (as shown, two isolated zones 119) between a second end of the sorbent structure and the opposing door. The two isolated zones 119 comprise a top isolated zone located above a bottom isolated zone. While the figures depict the preferred embodiment that the same door (308) comprises both inlet 312 and outlet 316, the inlet 312 and outlet 316 can be located on different doors (such as one on 308 and another on 310). During at least the closed position, system 400 further comprises a regenerating-fluid-flow-path 320 from the inlet 312 to the outlet 316, wherein the regenerating-fluid-flow-path (320) goes from the inlet door 308 to the opposing door 310, through a first portion 330 of flow channels 115, which are in the top isolated zone 119. The regenerating-fluid-flow-path 320 further goes downward to and through at least a second portion 332 of flow channels 115 below the first portion 330, from the opposing door 310 to the inlet door 308, before it reaches the outlet 316. As shown in FIG. 3B, the regenerating-fluid-flow-path 320 further moves down two additional portions 334 and 336, first from inlet door 308 to opposing door 310 and then from opposing door 310 back to inlet door 308 before exiting outlet 316. That is, the regenerating-fluid-flow-path 320 moves downward to and through at least a plurality of flow channels in the bottom isolated zone 119, from the opposing door 310 to the inlet door 308, before reaching the outlet 316.

If included, optional membranes 124 can provide further support to the sorbent structure(s) 112, particularly if sorbent structure(s) 112 are provided as multiple sorbent blocks, such as those shown in at least FIGS. 1D - 1E and described accordingly. One of ordinary skill knows when it would be desirable to include or not include such membranes. For instance, if sorbent structure(s) 112 can be provided as a single block that fills opening 110 (rather as smaller blocks) then such membrane may not be needed. Membranes 124 can also be impervious as desired to further add to the isolating effects of the seal assemblies during the closed position.

According to yet another aspect, there is provided a method to regenerate one or more saturated sorbent structure(s) using system 400. Referring to at least FIG. 4, when regeneration of sorbent structure(s) in a particular housing module 100 is desired (such as after a certain amount of selected gas has been captured by the sorbent and/or amount of adsorption time has passed), regenerating unit 300 can be moved along sorbent housing apparatus 200 so that doors 308 and 310 face the sorbent structures (112) to be regenerated, if they are not already in place. Referring at least to FIG. 3B, the doors 308 and 310 can then be actuated into the closed position to form the respective isolated zones 118 and 119 as described above. The regenerating fluid can be provided from the inlet 312 under conditions described herein. If optional diffuser plate 326 is employed, the stream of regenerating fluid can be further dispersed across the portion 330 of flow channels 115 in the top isolated zone 119. As the regenerating fluid stream is provided continuously for a period of time, it follows the regenerating-fluid-flow-path as described herein to outlet 316, where the entrained feed gas is first flushed out, followed by the regenerating fluid containing the desorbed selected gas (such as carbon dioxide).

After the sorbent structure(s) have been regenerated, the doors 308 and 310 actuate into an open position where they no longer contact the seal assemblies 116 and 120. The regenerating unit 300 can be moved laterally along sorbent housing apparatus 200 to the next sorbent housing module 100 for regeneration.

## Claims

1. A sorbent housing and regenerating system for a direct air capture (DAC) system, comprising:
a. a sorbent housing module (100) comprising:
• two side segments (102, 104),
• a top segment (106),
• a bottom segment (108),
• an opening (110) comprising two opposing faces, the opening being defined at least by the two side, top, and bottom segments,
• wherein a first face comprises a first seal assembly (116);
• wherein the opposing face comprises a second seal assembly (120);
b. one or more sorbent structure(s) to capture a selected gas from a gas mixture, the one or more sorbent structure(s) comprising a plurality of flow channels, wherein the one or more sorbent structure(s) being arranged in the opening such that the flow channels extend from one face to the other opposing face of the opening
c. a regenerating unit comprising:
• a pair of opposing doors (308 and 310), each facing a respective face of the opening 110 of the sorbent housing module (100),
• wherein one door comprises an inlet (312) to provide a regenerating fluid to the sorbent housing module, the inlet being located near a top portion of the respective door, and one door comprises an outlet (316) for the regenerating fluid to exit the sorbent housing module, the outlet being located near a bottom portion of the respective door, optionally, one door comprises both the inlet and the outlet;
• wherein, in a closed position, the door comprising the inlet (inlet door) contacts the first seal assembly of the sorbent housing module to provide at least two isolated zones between a first end of the sorbent structure and the inlet door, and the door opposing the inlet door (opposing door) contacts the second seal assembly of the sorbent housing module to provide at least one isolated zone between a second end of the sorbent structure and the opposing door; and
d. a regenerating-fluid-flow-path (320) from the inlet to the outlet being formed in the closed position with the sorbent structure(s) in the opening (110), wherein the regenerating-fluid-flow-path traverses from a first isolated zone of the inlet door, via a first portion (330) of flow channels, to a first isolated zone (119) of the opposing door and downward and subsequently back to a second isolated zone (118) of the inlet door, via a second portion (332) of flow channels before reaching the outlet, wherein the second isolated zone (332) of the inlet door being below the first isolated zone (332) of the inlet door.

2. The system of claim 1 wherein at least one of the first seal assembly (116) and the second seal assembly (120) further comprises a sealing element disposed along the perimeter of the respective face of the opening (110).

3. The system of any of claims 1 - 2, further comprising two or more rows of solid sorbent structures (112) positioned in the opening and a membrane (124) between at least two rows of the sorbent structures, preferably between all rows.

4. The system of claim 3, wherein the membrane is impervious.

5. The system of any prior claims, wherein at least one or both of the opposing doors comprises of at least one baffle (322) to facilitate the regenerating-fluid-flow-path.

6. The system of any prior claims, wherein the number of isolated sealed zones between the first end of the sorbent structure(s) and the inlet door is at least three or at least four.

7. The system of any prior claims, wherein the number of isolated sealed zones between the second end of the sorbent structure(s) and the opposing door is at least two or at least three.

8. The system of any prior claims, further comprising a support structure (302) being moveable on a track in a direction orthogonal (304) to the flow channels of the sorbent structure(s), wherein the opposing doors are fastened to the support structure (302).

9. The system of any prior claims, wherein the support structure comprises:
a. a pair of opposing frames (324) to which the pair of opposing doors is fastened;
b. a plurality of wheels (340) fastened to each of the frames; and
c. at least one connector plate (328) fastened to each frame to facilitate uniform lateral movement of the frames.

10. A method for regenerating one or more saturated sorbent structure(s) in a direct air capture (DAC) system, the method comprising:
a. providing the sorbent housing and regenerating system of any one of claims 1 - 9;
b. actuating the opposing doors to a closed position to form the respective isolated zones;
i. after step (c), providing a regenerating fluid from the inlet at a pressure greater than or equal to ambient atmospheric pressure into the housing; and
ii. moving at least part of the regenerating fluid from the inlet to the outlet at least via the regenerating-fluid-flow-path (320), wherein the regenerating fluid traverses from a first isolated zone (118) of the inlet door to a first isolated zone(119) of the opposing door, via a first portion (330) of the flow channels and downward and subsequently back to a second isolated zone (118) of the inlet door, via a second portion (332) of flow channels, before reaching the outlet, wherein the second portion of flow channels being below the first portion.

11. The method of claim 10, further comprising moving the regenerating fluid from the second isolated zone of the inlet door to a second isolated zone of the opposing door, via a third portion of flow channels, and downward and back to a third isolated zone of the inlet door, via a fourth portion of flow channels before reaching the outlet, wherein the third portion of flow channels are below the fourth portion of flow channels.

12. The method of any of claims 10 - 11, wherein the step of providing the regenerating fluid comprises providing steam having a pressure of 1.0 to 1.1 bar/100 to 110 KPa (14.5 to 16.0 psi), and at a temperature in a range from 100 and up to 150 degrees C, preferably from 110 and up to 130 °C to the sorbent structures.

13. The method of any of claims 10 - 12, wherein the gas mixture consists essentially of ambient air.

14. The method of any one of claims 10 - 13, wherein the selected gas comprises CO₂.

15. The method of any one of claims 10 - 14, wherein the concentration of the CO₂ in the gas mixture is less than 500 ppm.

## Patentansprüche

1. Sorptionsmittelgehäuse- und Regeneriersystem für ein Direct-Air-Capture-System (DAC-System), umfassend:
a. ein Sorptionsmittelgehäusemodul (100), umfassend:
• zwei seitliche Segmente (102, 104),
• ein oberes Segment (106),
• ein unteres Segment (108),
• eine Öffnung (110), umfassend zwei gegenüberliegende Flächen, wobei die Öffnung mindestens durch die zwei seitlichen, das obere und das untere Segment(e) definiert ist,
• wobei eine erste Fläche eine erste Dichtungsanordnung (116) umfasst;
• wobei die gegenüberliegende Fläche eine zweite Dichtungsanordnung (120) umfasst;
b. eine oder mehrere Sorptionsmittelstruktur(en), um ein ausgewähltes Gas aus einem Gasgemisch einzufangen, die eine oder die mehreren Sorptionsmittelstruktur(en) umfassend eine Vielzahl von Strömungskanälen, wobei die eine oder die mehreren Sorptionsmittelstruktur(en) in der Öffnung derart aufgestellt sind, dass sich die Strömungskanäle von einer Fläche zu der anderen gegenüberliegenden Fläche der Öffnung erstrecken,
c. eine Regeneriereinheit, umfassend:
• ein Paar gegenüberliegende Türen (308 und 310), die jeweils einer entsprechenden Fläche der Öffnung 110 des Sorptionsmittelgehäusemoduls (100) zugewandt sind,
• wobei eine Tür einen Einlass (312) umfasst, um dem Sorptionsmittelgehäusemodul ein Regenerierfluid bereitzustellen, wobei der Einlass nahe einem oberen Abschnitt der jeweiligen Tür gelegen ist, und eine Tür einen Auslass (316) für das Regenerierfluid zum Austreten aus dem Sorptionsmittelgehäusemodul umfasst, wobei der Auslass nahe einem unteren Abschnitt der jeweiligen Tür gelegen ist, wobei optional eine Tür sowohl den Einlass als auch den Auslass umfasst;
• wobei, in einer geschlossenen Position, die den Einlass umfassende Tür (Einlasstür) die erste Dichtungsanordnung des Sorptionsmittelgehäusemoduls kontaktiert, um mindestens zwei isolierte Zonen zwischen einem ersten Ende der Sorptionsmittelstruktur und der Einlasstür bereitzustellen, und die der Einlasstür gegenüberliegende Tür (gegenüberliegende Tür) die zweite Dichtungsanordnung des Sorptionsmittelgehäusemoduls kontaktiert, um mindestens eine isolierte Zone zwischen einem zweiten Ende der Sorptionsmittelstruktur und der gegenüberliegenden Tür bereitzustellen; und
d. einen Regenerierfluidströmungsweg (320) von dem Einlass zu dem Auslass, der in der geschlossenen Position mit der/den Sorptionsmittelstruktur(en) in der Öffnung (110) ausgebildet ist, wobei der Regenerierfluidströmungsweg von einer ersten isolierten Zone der Einlasstür über einen ersten Abschnitt (330) von Strömungskanälen zu einer ersten isolierten Zone (119) der gegenüberliegenden Tür und nach unten und anschließend über einen zweiten Abschnitt (332) von Strömungskanälen zurück zu einer zweiten isolierten Zone (118) der Einlasstür vor einem Erreichen des Auslasses verläuft, wobei sich die zweite isolierte Zone (332) der Einlasstür unterhalb der ersten isolierten Zone (332) der Einlasstür befindet.

2. System nach Anspruch 1, wobei mindestens eine der ersten Dichtungsanordnung (116) und der zweiten Dichtungsanordnung (120) ferner ein Dichtelement, das entlang des Umfangs der jeweiligen Fläche der Öffnung (110) eingerichtet ist, umfasst.

3. System nach einem der Ansprüche 1 bis 2, ferner umfassend zwei oder mehr Reihen von festen Sorptionsmittelstrukturen (112), die in der Öffnung positioniert sind, und eine Membran (124) zwischen mindestens zwei Reihen der Sorptionsmittelstrukturen, vorzugsweise zwischen allen Reihen.

4. System nach Anspruch 3, wobei die Membran undurchlässig ist.

5. System nach einem der vorstehenden Ansprüche, wobei mindestens eine oder beide der gegenüberliegenden Türen mindestens ein Leitblech (322) umfasst, um den Regenerierfluidströmungsweg zu erleichtern.

6. System nach einem der vorstehenden Ansprüche, wobei die Anzahl von isolierten abgedichteten Zonen zwischen dem ersten Ende der Sorptionsmittelstruktur(en) und der Einlasstür mindestens drei oder mindestens vier beträgt.

7. System nach einem der vorstehenden Ansprüche, wobei die Anzahl von isolierten abgedichteten Zonen zwischen dem zweiten Ende der Sorptionsmittelstruktur(en) und der gegenüberliegenden Tür mindestens zwei oder mindestens drei beträgt.

8. System nach einem der vorstehenden Ansprüche, ferner umfassend eine Stützstruktur (302), die auf einer Schiene in einer Richtung orthogonal (304) zu den Strömungskanälen der Sorptionsmittelstruktur(en) bewegbar ist, wobei die gegenüberliegenden Türen an der Stützstruktur (302) befestigt sind.

9. System nach einem der vorstehenden Ansprüche, wobei die Stützstruktur umfasst:
a. ein Paar gegenüberliegende Rahmen (324), an dem das Paar gegenüberliegende Türen befestigt ist;
b. eine Vielzahl von Rädern (340), die an jedem der Rahmen befestigt sind; und
c. mindestens eine Verbindungsplatte (328), die an jedem Rahmen befestigt ist, um eine gleichmäßige laterale Bewegung der Rahmen zu erleichtern.

10. Verfahren zum Regenerieren einer gesättigten oder mehrerer gesättigter Sorptionsmittelstruktur(en) in einem Direct-Air-Capture-System (DAC-System), das Verfahren umfassend:
a. Bereitstellen des Sorptionsmittelgehäuse- und Regeneriersystems nach einem der Ansprüche 1 bis 9;
b. Betätigen der gegenüberliegenden Türen in eine geschossene Position, um die jeweiligen isolierten Zonen auszubilden;
i. nach Schritt (c), Bereitstellen eines Regenerierfluids aus dem Einlass bei einem Druck größer als oder gleich dem atmosphärischen Umgebungsdruck in das Gehäuse; und
ii. Bewegen mindestens eines Teils des Regenerierfluids von dem Einlass zu dem Auslass mindestens über den Regenerierfluidströmungsweg (320), wobei das Regenerierfluid von einer ersten isolierten Zone (118) der Einlasstür zu einer ersten isolierten Zone (119) der gegenüberliegenden Tür über einen ersten Abschnitt (330) der Strömungskanäle und nach unten und anschließend über einen zweiten Abschnitt (332) von Strömungskanälen zurück zu einer zweiten isolierten Zone (118) der Einlasstür vor dem Erreichen des Auslasses verläuft, wobei sich der zweite Abschnitt von Strömungskanälen unterhalb des ersten Abschnitts befindet.

11. Verfahren nach Anspruch 10, ferner umfassend das Bewegen des Regenerierfluids von der zweiten isolierten Zone der Einlasstür zu einer zweiten isolierten Zone der gegenüberliegenden Tür über einen dritten Abschnitt von Strömungskanälen und nach unten und zurück zu einer dritten isolierten Zone der Einlasstür über einen vierten Abschnitt von Strömungskanälen vor dem Erreichen des Auslasses, wobei sich der dritte Abschnitt von Strömungskanälen unterhalb des vierten Abschnitts von Strömungskanälen befindet.

12. Verfahren nach einem der Ansprüche 10 bis 11, wobei der Schritt des Bereitstellens des Regenerierfluids das Bereitstellen von Dampf mit einem Druck von 1,0 bis 1,1 bar/100 bis 110 KPa (14,5 bis 16,0 psi) und bei einer Temperatur in einem Bereich von 100 und bis zu 150 Grad C, vorzugsweise von 110 und bis zu 130 °C, an die Sorptionsmittelstrukturen umfasst.

13. Verfahren nach einem der Ansprüche 10 bis 12, wobei das Gasgemisch im Wesentlichen aus Umgebungsluft besteht.

14. Verfahren nach einem der Ansprüche 10 bis 13, wobei das ausgewählte Gas CO₂ umfasst.

15. Verfahren nach einem der Ansprüche 10 bis 14, wobei die Konzentration des CO₂ in dem Gasgemisch weniger als 500 ppm beträgt.

## Revendications

1. Système de logement et de régénération de sorbant pour un système de captage direct dans l'air (DAC), comprenant :
a. un module de logement de sorbant (100) comprenant :
• deux segments latéraux (102, 104),
• un segment supérieur (106),
• un segment inférieur (108),
• une ouverture (110) comprenant deux faces opposées, l'ouverture étant définie au moins par les deux segments latéraux supérieur et inférieur,
• dans lequel une première face comprend un premier ensemble d'étanchéité (116) ;
• dans lequel la face opposée comprend un second ensemble d'étanchéité (120) ;
b. une ou plusieurs structures de sorbant pour capturer un gaz choisi à partir d'un mélange gazeux, ladite ou lesdites structures de sorbant comprenant une pluralité de canaux d'écoulement, dans lequel ladite ou lesdites structures de sorbant sont agencées dans l'ouverture de telle sorte que les canaux d'écoulement s'étendent d'une face à l'autre face opposée de l'ouverture
c. une unité de régénération comprenant :
• une paire de portes opposées (308 et 310), chacune faisant face à une face respective de l'ouverture 110 du module de logement de sorbant (100),
• dans lequel une porte comprend une entrée (312) pour fournir un fluide de régénération au module de logement de sorbant, l'entrée étant située à proximité d'une partie supérieure de la porte respective, et une porte comprend une sortie (316) pour que le fluide de régénération sorte du module de logement de sorbant, la sortie étant située à proximité d'une partie inférieure de la porte respective, éventuellement, une porte comprend à la fois l'entrée et la sortie ;
• dans lequel, dans une position fermée, la porte comprenant l'entrée (porte d'entrée) entre en contact avec le premier ensemble d'étanchéité du module de logement de sorbant pour fournir au moins deux zones isolées entre une première extrémité de la structure de sorbant et la porte d'entrée, et la porte opposée à la porte d'entrée (porte opposée) entre en contact avec le second ensemble d'étanchéité du module de logement de sorbant pour fournir au moins une zone isolée entre une seconde extrémité de la structure de sorbant et la porte opposée ; et
d. un chemin d'écoulement de fluide de régénération (320) de l'entrée à la sortie étant formé dans la position fermée avec la ou les structures de sorbant dans l'ouverture (110), dans lequel le chemin d'écoulement de fluide de régénération passe d'une première zone isolée de la porte d'entrée, par le biais d'une première partie (330) de canaux d'écoulement, jusqu'à une première zone isolée (119) de la porte opposée et vers le bas, puis retourne vers une seconde zone isolée (118) de la porte d'entrée, par le biais d'une deuxième partie (332) de canaux d'écoulement avant d'atteindre la sortie, dans lequel la seconde zone isolée (332) de la porte d'entrée est en dessous de la première zone isolée (332) de la porte d'entrée.

2. Système selon la revendication 1 dans lequel au moins l'un du premier ensemble d'étanchéité (116) et du second ensemble d'étanchéité (120) comprend en outre un élément d'étanchéité disposé le long du périmètre de la face respective de l'ouverture (110).

3. Système selon l'une quelconque des revendications 1 à 2, comprenant en outre deux rangées ou plus de structures de sorbant solide (112) positionnées dans l'ouverture et une membrane (124) entre au moins deux rangées des structures de sorbant, de préférence entre toutes les rangées.

4. Système selon la revendication 3, dans lequel la membrane est imperméable.

5. Système selon l'une quelconque des revendications précédentes, dans lequel au moins l'une des portes opposées ou les deux comprennent au moins un déflecteur (322) pour faciliter le chemin d'écoulement de fluide de régénération.

6. Système selon l'une quelconque des revendications précédentes, dans lequel le nombre de zones étanches isolées entre la première extrémité de la ou des structures de sorbant et la porte d'entrée est d'au moins trois ou d'au moins quatre.

7. Système selon l'une quelconque des revendications précédentes, dans lequel le nombre de zones étanches isolées entre la seconde extrémité de la ou des structures de sorbant et la porte opposée est d'au moins deux ou d'au moins trois.

8. Système selon l'une quelconque des revendications précédentes, comprenant en outre une structure de support (302) étant mobile sur une piste dans une direction orthogonale (304) aux canaux d'écoulement de la ou des structures de sorbant, dans lequel les portes opposées sont fixées à la structure de support (302).

9. Système selon l'une quelconque des revendications précédentes, dans lequel la structure de support comprend :
a. une paire de cadres opposés (324) auxquels la paire de portes opposées est fixée ;
b. une pluralité de roues (340) fixées à chacun des cadres ; et
c. au moins une plaque de raccordement (328) fixée à chaque cadre pour faciliter un mouvement latéral uniforme des cadres.

10. Procédé de régénération d'une ou plusieurs structures de sorbant saturées dans un système de captage direct dans l'air (DAC), le procédé comprenant :
a. la fourniture du système de logement et de régénération de sorbant selon l'une quelconque des revendications 1 à 9 ;
b. l'actionnement des portes opposées vers une position fermée pour former les zones isolées respectives ;
i. après l'étape (c), la fourniture d'un fluide de régénération depuis l'entrée à une pression supérieure ou égale à la pression atmosphérique ambiante dans le logement ; et
ii. le déplacement d'au moins une partie du fluide de régénération de l'entrée à la sortie au moins par le biais du chemin d'écoulement de fluide de régénération (320), dans lequel le fluide de régénération passe d'une première zone isolée (118) de la porte d'entrée à une première zone isolée (119) de la porte opposée, par le biais d'une première partie (330) des canaux d'écoulement et vers le bas, puis retourne vers une seconde zone isolée (118) de la porte d'entrée, par le biais d'une deuxième partie (332) de canaux d'écoulement, avant d'atteindre la sortie, dans lequel la deuxième partie de canaux d'écoulement est en dessous de la première partie.

11. Procédé selon la revendication 10, comprenant en outre le déplacement du fluide de régénération de la deuxième zone isolée de la porte d'entrée vers une deuxième zone isolée de la porte opposée, par le biais d'une troisième partie de canaux d'écoulement, et vers le bas et en retour vers une troisième zone isolée de la porte d'entrée, par le biais d'une quatrième partie de canaux d'écoulement avant d'atteindre la sortie, dans lequel la troisième partie des canaux d'écoulement est en dessous de la quatrième partie des canaux d'écoulement.

12. Procédé selon l'une quelconque des revendications 10 à 11, dans lequel l'étape de fourniture du fluide de régénération comprend la fourniture de vapeur ayant une pression de 1,0 à 1,1 bar/100 à 110 kPa (14,5 à 16,0 psi), et à une température dans une plage de 100 et jusqu'à 150 degrés C, de préférence de 110 et jusqu'à 130 °C aux structures de sorbant.

13. Procédé selon l'une quelconque des revendications 10 à 12, dans lequel le mélange gazeux est constitué sensiblement d'air ambiant.

14. Procédé selon l'une quelconque des revendications 10 à 13, dans lequel le gaz choisi comprend du CO₂.

15. Procédé selon l'une quelconque des revendications 10 à 14, dans lequel la concentration du CO₂ dans le mélange gazeux est inférieure à 500 ppm.
